(19) Europäisches Patentamt
European Patent Office
Office européen des brevets

(11) **EP 1 831 669 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **05850316.0**

(22) Anmeldetag: **21.12.2005**

(51) Int Cl.:
*G01N 17/00* (2006.01)      *G01J 3/50* (2006.01)

(86) Internationale Anmeldenummer:
**PCT/EP2005/013775**

(87) Internationale Veröffentlichungsnummer:
**WO 2006/069695 (06.07.2006 Gazette 2006/27)**

(54) **HOCHEMPFINDLICHES VERFAHREN ZUR DETEKTION VON UNTERSCHIEDEN ZWISCHEN DEN PHYSIKALISCH MESSBAREN EIGENSCHAFTEN EINER PROBE UND EINER REFERENZ**

HIGH-SENSITIVITY METHOD FOR DETECTING DIFFERENCES BETWEEN THE PHYSICALLY MEASURABLE PROPERTIES OF A SAMPLE AND A REFERENCE

PROCEDE A HAUTE SENSIBILITE DE DETECTION DES DIFFERENCES ENTRE LES PROPRIETES PHYSIQUEMENT MESURABLES D'UN ECHANTILLON ET CELLES D'UNE REFERENCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2004 DE 102004062256**

(43) Veröffentlichungstag der Anmeldung:
**12.09.2007 Patentblatt 2007/37**

(73) Patentinhaber: **BASF SE**
**67056 Ludwigshafen (DE)**

(72) Erfinder:
• **SENS, Rüdiger**
**67069 Ludwigshafen (DE)**

• **THIEL, Erwin**
**57299 Burbach-Gilsbach (DE)**

(74) Vertreter: **Hörschler, Wolfram Johannes**
**Isenbruck Bösl Hörschler Wichmann Huhn LLP**
**Patentanwälte**
**Theodor-Heuss-Anlage 12**
**68165 Mannheim (DE)**

(56) Entgegenhaltungen:
**EP-A- 0 908 716          WO-A-20/05019808**
**GB-A- 1 315 318**

# EP 1 831 669 B1

**Beschreibung**

Die Erfindung betrifft ein hochempfindliches Verfahren zur Detektion von Unterschieden zwischen den physikalisch messbaren Eigenschaften einer Probe und einer Referenz.

Die Erfindung betrifft insbesondere ein Verfahren zur Detektion der durch einen Umwelteinfluss hervorgerufenen Änderung einer physikalisch messbaren Eigenschaft einer Probe.

Für die industrielle Produktion von Farbstoffen, Pigmenten, Lacken, UV-Stabilisatoren und Sonnenschutzmitteln ist es von entscheidender Bedeutung, die Lichtechtheit der Produkte zu kennen. Derzeit wird die Lichtechtheit eines Produktes gemessen, indem das Produkt mit Licht, dessen spektrale Verteilung derjenigen von Sonnenlicht auf der Eroberfläche entspricht, bestrahlt wird. Nach Bestrahlung wird die Farbänderung mit Hilfe von Referenzsystemen quantifiziert. Nachteilig an dieser Vorgehensweise sind die zum Teil sehr langen Bestrahlungszeiten, die notwendig sind, um bei vielen Produkten eine Farbänderung erkennbar zu machen. So betragen nach einschlägigen DIN-Normen die Bestrahlungszeiten 1000 h und mehr. Für sehr lichtechte Proben betragen sie 10 bis 50 Jahre. Anschließend wird gegen eine Farbskala, beispielsweise die blaue Wollskala, referenziert. Nachteilig an dieser Vorgehensweise ist ferner, dass ein Mensch die Bewertung vornehmen muss und diese Bewertung daher von einem subjektiven Eindruck bestimmt wird.

Beispiele für Proben, welche besonders lange Belichtungszeiten benötigten, sind Fassadenfarbe, Autobahnschilder, Dichtungsmaterialien für Gebäude, Elektroisolatoren, Dachziegeln und Sicherheitsscheiben. Weitere Proben werden in den nachstehenden Normen für Belichtung bzw. Bewitterung genannt.

Einschlägige Normen für die Bewitterung mit künstlichem Tageslicht sind ISO 4892 (1994) für Kunststoffe, ISO 11341 (1994) für Lacke und Anstrichstoffe, ISO 11507 (1997) für Beschichtungen in Geräten, ISO 3917 (1999) für Straßenfahrzeuge Sicherheitsscheiben, ISO 11431 (2002) für Hochbau-Fugendichtstoffe, ISO 105-B02 (1994) für Textilien-Farbechtheitsprüfungen und ISO 105-B04 (1994) für Textilien-Farbechtheit-Bewitterung.

Einschlägige Normen für direkte Bewitterung sind ASTM G7, ISO 877, ISO 2810, ASTM D4141C (Black Box) und ASTM G24 (Unter Glas Belichtung).

Die Patentschriften EP 0 908 716 A1 und GB 1 315 318 beschreiben optische Meßverfahren zur Beobachtung der Beeinflussung von Proben durch Langzeitbestrahlung.

Mit dem Ziel, die notwendige Bestrahlungszeit zu verringern, werden die Produkte häufig mit einem mehrfachen der Sonnenintensität bestrahlt. Es hat sich jedoch gezeigt, dass die mit erhöhter Bestrahlungsintensität gemessenen Lichtechtheiten häufig nicht mit denjenigen übereinstimmen, die unter natürlichen Bedingungen vorliegen. Mit anderen Worten ist die in der bestrahlten Probe erzeugte Farbänderung $\Delta F$ nicht nur von dem als Strahlendosis S bezeichneten Produkt aus Intensität I und Bestrahlungszeit $\Delta t$ abhängig, sondern explizit auch von der Intensität I der Strahlung $\Delta F = f(S, I)$.

Aufgabe der Erfindung ist es, ein Messverfahren bereitzustellen, mit dem die durch Licht induzierte Farbänderung an einer Probe bereits nach kurzer Bestrahlungszeit bestimmt werden kann, ohne dass von natürlichen Bedingungen abweichende Bestrahlungsintensitäten angewendet werden müssen.

Gelöst wird die Aufgabe durch ein Verfahren zur Detektion von Unterschieden zwischen den physikalisch messbaren Eigenschaften einer Probe P und einer Referenzprobe R, bei dem man

(i) ein Probe P bereitstellt,

(ii) eine Referenzprobe R bereitstellt,

(iii) ein flächiges Referenzfeld RF bereitstellt,

(iv) ein erstes flächiges Muster aus Bereichen der Referenzprobe R und des Referenzfeldes RF und ein zweites flächiges Muster aus Bereichen der Probe P und des Referenzfeldes RF erzeugt, wobei das erste und zweite Muster durch eine orts- und wellenlängenabhängige Musterfunktion $M(x, y, \lambda)$ beschrieben werden,

(v) für das erste Muster zu einem frei wählbaren Zeitpunkt $t_0$ und für das zweite Muster zum Zeitpunkt t mittels eines Detektors die Transmission, Reflexion oder Streuung von Analysestrahlung durch das erste Muster bzw. zweite Muster in Abhängigkeit der Ortskoordinaten (x, y) des ersten bzw. zweiten Musters und der Wellenlänge $\lambda$ der Analysestrahlung detektiert, und so
eine erste Muster-Antwortfunktion $M_0(x, y, \lambda, t_0)$, welche räumlich getrennte Bereiche einer Referenz-Antwortfunktion $R_0(x, y, \lambda, t_0)$ und einer ersten Referenzfeld-Antwortfunktion $RF_0(x, y, \lambda, t_0)$ enthält, für das erste Muster bestimmt,
eine zweite Muster-Antwortfunktion $M_t(x, y, \lambda, t)$, welche räumlich getrennte Bereiche einer Proben-Antwortfunktion $P_t(x, y, \lambda, t)$ und einer zweiten Referenzfeld-Antwortfunktion $RF_t(x, y, \lambda, t)$ enthält, für das zweite Muster bestimmt, wobei die Funktionen $M_0$ und $M_t$ jeweils die Intensität der transmittierten, reflektierten oder gestreuten Analysestrahlung in Abhängigkeit von den Ortskoordinaten (x, y) des ersten bzw. zweiten Musters und der Wellenlänge $\lambda$

zu den unterschiedlichen Zeitpunkten der Detektion $t_0$ bzw. t wiedergeben,

(vi) eine Korrektur der Proben-Antwortfunktion $P_t$ derart vornimmt, dass man mittels der ersten und der zweiten Referenzfeld-Antwortfunktion $RF_0$ und $RF_t$ die detektorbedingte ortsabhängigen und zeitabhängigen Schwankungen aus der Proben-Antwortfunktion $P_t$ eliminiert, wobei man eine korrigierte Proben-Antwortfunktion $P_{t, korr}$ erhält,

(vii) aus der korrigierten Proben-Antwortfunktion $P_{t, korr}$ und der Referenz-Antwortfunktion $R_0$ die Änderung der physikalisch messbaren Eigenschaft bestimmt.

Erfindungsgemäß wird eine Korrektur der Proben-Antwortfunktion der Probe durchgeführt, um die vorhandenen zeitabhängigen und ortsabhängigen Schwankungen des Detektors, beispielsweise eines Scanners, zu eliminieren. Dieser Verfahrensschritt wird nachfolgend auch als Referenzfeld-Korrektur bezeichnet. Dazu wird in Schritt (v) zusätzlich die Transmission, Reflexion bzw. Streuung der Analysestrahlung durch ein Referenzfeld detektiert, welches die Probe bzw. Referenzprobe umgibt oder durchdringt, und so eine Referenzfeld-Antwortfunktion bestimmt. Von dem Referenzfeld wird angenommen, dass es räumlich homogen und zeitlich konstant ist. Aus den orts-, zeit- und wellenlängenabhängigen Schwankungen der Referenzfeld-Antwortfunktion werden so die orts-, zeit- und wellenlängenabhängigen Schwankungen des Detektors ermittelt und die Antwortfunktion entsprechend korrigiert. So erhält man aus der zum Zeitpunkt t bestimmten Probe-Antwortfunktion $P_t$ durch örtliche, zeitliche und spektrale Korrektur unter Verwendung der Referenzfeld-Antwortfunktionen zum Zeitpunkt $t_0$ bzw. t eine korrigierte Probe-Antwortfunktion $P_{t, korr}$.

Das Referenzfeld kann die Probe bzw. Referenzprobe umgeben oder durchdringen. Beispielsweise kann die Probe als kleines Rechteck innerhalb eines größeren rechteckigen Referenzfeldes angeordnet sein. Das Referenzfeld kann die Probe als Barcode-Muster oder Schachbrett-Muster durchdringen. Das Barcode- oder Schachbrett-Muster kann zusätzlich als kleines Rechteck innerhalb eines größeren rechteckigen Referenzfeldes angeordnet sein. Beliebige weitere Anordnungen sind denkbar. Die Anordnung von Referenzfeld und Probe bzw. Referenzprobe wird durch eine orts- und wellenlängenabhängige Musterfunktion $M(x, y, \lambda)$ beschrieben. Die Antwortfunktionen für Referenzprobe und Referenzfeld bzw. Probe und Referenzfeld sind in der gemessenen ersten bzw. zweiten Muster-Antwortfunktion enthalten. Diese gemessenen Muster-Antwortfunktionen werden herangezogen, um mit Hilfe geeigneter mathematischer Operationen eine Korrektur der Probe-Antwortfunktion durchzuführen und so die orts-, zeit- und wellenlängenabhängigen Detektorschwankungen zu eliminieren.

Bevorzugt ist die Referenzprobe eine unbehandelte Probe, deren Antwortfunktion $R_0$ zum Zeitpunkt $t_0$ bestimmt wird. Die Probe ist eine behandelte Probe, deren Antwortfunktion $P_t$ zum Zeitpunkt t bestimmt wird. Werden mehrere Antwortfunktionen für die behandelte Probe zu mehreren verschiedenen Zeitpunkten $t_i$ bestimmt, so werden mehrere (zeitabhängige) Antwortfunktionen $P_{ti}$ erhalten und die oben beschriebene Korrektur für jeden Zeitpunkt $t_i$ durchgeführt.

In einem ersten Schritt (i) wird eine Probe P bereitgestellt. Die Probe P kann sich von der Referenzprobe R unterscheiden, wobei sich diese Unterschiede in den physikalisch messbaren Eigenschaften der Probe P und Referenzprobe R manifestieren. Zweck des erfindungsgemäßen Verfahrens ist es, das bestehen oder Nichtbestehen dieser Unterschiede nachzuweisen und/oder diese Unterschiede quantitativ zu erfassen. Beispielsweise kann mit dem erfindungsgemäßen Verfahren die Bewitterungsechtheit einer Lackprobe festgestellt werden.

Vorzugsweise umfasst das Bereitstellen der Probe P in dem ersten Schritt (i) das Behandeln einer Probe, wobei die Behandlung darin besteht, dass die Probe einem Umwelteinfluss ausgesetzt wird. Die Probe ist insbesondere eine Substratoberfläche. Dabei wird die zu untersuchende Substratoberfläche einem Umwelteinfluss ausgesetzt. Umwelteinflüsse im Sinne der vorliegenden Erfindung sind beliebige äußere Einwirkungen auf die Probe, welche geeignet sind, deren physikalisch messbare Eigenschaften zu ändern. Umwelteinflüsse im Sinne der vorliegenden Erfindung umfassen die Einwirkung von Licht oder - allgemeiner - Strahlung, von mechanischen Kräften, von Chemikalien, von Gasen, von Mikroorganismen, von radioaktiver Strahlung, von Schall (beispielsweise Ultraschall) und von Wärme auf die Substratoberfläche. Der Umwelteinfluss kann beispielsweise durch Bestrahlung oder Bewitterung der Substratoberfläche oder durch Auftragen von Chemikalien auf die Substratoberfläche bewirkt werden. Mit "Chemikalien" sind dabei alle Stoffe oder Stoffgemische (beispielsweise auch kosmetische Formulierungen) gemeint, die mit der Substratoberfläche bzw. mit deren Inhaltsstoffen reagieren können. Der Umwelteinfluss kann auch ein Zusammenspiel von mehreren der oben beispielhaft genannten äußeren Einwirkungen beinhalten. So wirken bei der Photooxidation Licht und atmosphärischer Sauerstoff zusammen. Bei Bewitterungsversuchen im Freien sind die bewitterten Proben im Allgemeinen der Einwirkung von Licht, Chemikalien (Wasser, Säuren etc.), Gasen, Mikroorganismen, Wärme sowie mechanischen Einwirkungen (Wind, Regen) ausgesetzt.

Physikalisch messbar im Sinne der vorliegenden Erfindung sind die Eigenschaften der Substratoberfläche, wenn sie über die Wechselwirkung der Probe mit einer auf die Probe oder in die Probe eingestrahlten Analysestrahlung erfassbar sind. Analysestrahlung kann jede beliebige Strahlung sein, die mit der Probe wechselwirken und von ihr transmittiert, reflektiert oder gestreut werden kann. Beispiele sind elektromagnetische Strahlung, Partikelstrahlung (Neutronen, radioaktive alpha- oder beta-Strahlung) oder akustische Strahlung (beispielsweise Ultraschall).

Der Begriff der Probe ist denkbar weit gefasst und umfasst allgemein Objekte, die gezielt bestimmten Umwelteinflüssen ausgesetzt werden können. Beispielsweise kann die Probe ein mit einer Pigmentschicht beschichtetes Substrat sein, welches zur Untersuchung der Lichtechtheit der Pigmentschicht einer UV-Strahlung ausgesetzt wird. Bei der Probe kann es sich um ein Feld handeln, das zur Untersuchung der Wirksamkeit von Herbiziden oder Fungiziden mit diesen behandelt und später aus der Luft aufgenommen wird. Soll die Abriebsfestigkeit oder Witterungsbeständigkeit von Fassadenbeschichtungen untersucht werden, so kann es sich bei der Probe um eine Gebäudewand handeln, die natürlich bewittert oder einem Sandstrahl ausgesetzt wird.

Es können lediglich oberflächliche Eigenschaftsänderungen durch den Umwelteinfluss induziert und anschließend detektiert werden. Es können aber auch im Innern einer Probe Eigenschaftsänderungen durch einen Umwelteinfluss induziert und anschließend detektiert werden. Letzteres hängt auch von der Durchlässigkeit der Probe für den Umwelteinfluss und die verwendete Analysestrahlung ab. Strahlung kann beispielsweise oberflächlich reflektiert oder gestreut werden oder aber auch die Probe völlig durchdringen. Strahlung kann auch durch geeignete Vorrichtungen auf eine Ebene im Innern der Probe fokussiert und damit die Eigenschaftsänderung in dieser Ebene detektiert werden.

In einer Ausführungsform des erfindungsgemäßen Verfahrens wird die Oberfläche einer Probe untersucht. Nachfolgend wird auch der Begriff "Substratoberfläche" für die zu untersuchende Oberfläche einer Probe verwendet. Der Begriff umfasst dabei nicht nur die geometrisch verstandene Oberfläche der Probe, sondern auch unterhalb dieser geometrischen Oberfläche liegende tiefere Schichten der Probe, welche noch der Messung mittels der gewählten physikalischen Methode zugänglich sind.

Der Umwelteinfluss wirkt im Allgemeinen mit räumlich konstanter Intensität auf die Probe bzw. Substratoberfläche ein. Ist der einwirkende Umwelteinfluss Licht mit einer bestimmten Wellenlänge oder mit einer bestimmten spektralen Verteilung, so ist die Intensität mit der Strahlungsintensität gleichzusetzen, welche in $W/cm^2$ gemessen wird. Ist der einwirkende Umwelteinfluss die Einwirkung mechanischer Kräfte, die beispielsweise dadurch verursacht wird, dass eine Substratoberfläche einem Sandstrahl ausgesetzt wird, so kann die Intensität dieses Umwelteinflusses mit der Zahl der pro Zeit- und Flächeneinheit auf die Substratoberfläche auftreffenden Sandteilchen gleichgesetzt werden. Ist der einwirkende Umwelteinfluss die Einwirkung von Chemikalien oder Gasen, so kann die Intensität dieses Umwelteinflusses mit der Konzentration eines bestimmten Stoffes am Ort der Substratoberfläche gleichgesetzt werden. Ist der einwirkende Umwelteinfluss die Einwirkung von Mikroorganismen, so kann die Intensität dieses Umwelteinflusses mit der Zahl der Mikroorganismen pro Flächeneinheit gleichgesetzt werden.

Die Probe wird während einer bestimmten Einwirkungszeit $\Delta t$ dem Umwelteinfluss ausgesetzt. Die Einwirkungszeit $\Delta t$ hängt von Art und Intensität des Umwelteinflusses ab und kann Sekunden, Minuten, Stunden oder Tage, beispielsweise eine Sekunde bis 10 Tage, betragen.

In einem zweiten Schritt (ii) wird eine Referenzprobe bereitgestellt. Die Referenzprobe kann eine beliebige Probe sein, deren Identität oder Nichtidentität mit der Probe festgestellt werden soll. Soll eine durch Umwelteinflüsse induzierte Eigenschaftsänderung festgestellt werden, ist die Referenzprobe eine unbehandelte Probe. Diese weist zumindest an ihrer Oberfläche die gleiche Beschaffenheit auf wie die Probe, die dem Umwelteinfluss ausgesetzt wird, d. h. die Probe und die Referenzprobe sind, bevor die Probe dem Umwelteinfluss ausgesetzt wird, bezüglich ihrer Oberflächeneigenschaften im wesentlichen identisch. Die Referenzprobe wird dem Umwelteinfluss nicht ausgesetzt.

Die Referenzprobe kann auch die Probe selbst sein, bevor diese dem Umwelteinfluss ausgesetzt wird, das heißt die Referenzprobe kann die unbehandelte Probe sein. Bevorzugt ist die Referenzprobe die unbehandelte Probe. Dadurch wird sichergestellt, dass (unbehandelte) Probe und Referenzprobe tatsächlich identische Eigenschaften aufweisen.

In einem dritten Schritt (iii) wird ein Referenzfeld bereitgestellt. Vorzugsweise weist die Oberfläche des Referenzfeldes die gleichen Eigenschaften wie die Referenzprobe auf.

In einem vierten Schritt (iv) werden aus Bereichen der Referenzprobe R und des Referenzfeldes RF ein flächiges ersten Muster und aus Bereichen der Probe P und des Referenzfeldes RF ein flächiges zweites Muster erzeugt, wobei das erste und zweite Muster durch eine orts- und wellenlängenabhängige Musterfunktion $M(x, y, \lambda)$ beschrieben werden. Die Musterfunktion M kann eine, muss aber keine explizite Wellenlängenabhängigkeit aufweisen.

Selbstverständlich ist die Durchführung der Schritte (i) - (iv) an keine bestimmte Reihenfolge gebunden. Jede sinnvolle Reihenfolge ist möglich.

Das Referenzfeld kann beispielsweise eine Maske oder Schablone sein, die Aussparungen aufweist. Die Aussparungen können beliebige geometrische Formen aufweisen und beliebig angeordnet sein. Vorzugsweise weisen die Aussparungen geometrisch regelmäßige Aussparungen auf und sind regelmäßig angeordnet. Beispiele sind ein Schachbrett-Muster oder ein Barcode-Muster. Das Muster mit Bereichen aus Referenzfeld und Probe bzw. Referenzprobe wird dann dadurch erzeugt, dass man hinter den Aussparungen oder in den Aussparungen der Maske Bereiche der (Referenz)Probe anordnet. Beispielsweise kann die Maske des Referenzfeldes mit der (Referenz)Probe hinterlegt werden, wobei Bereiche der hinterlegten (Referenz)Probe durch die Aussparungen der Maske sichtbar werden. Die (Referenz)Probe kann auch in die Aussparungen eingelegt werden oder Erhebungen aufweisen, welche komplementär zu den Aussparungen der Maske sind und somit in deren Aussparungen passen,

wobei die Höhe der Erhebungen vorzugsweise der Dicke der Maske entspricht, wodurch Maske und (Referenz)Probe formschlüssig miteinander verbunden werden können und ein Muster mit glatter Oberfläche erhalten wird.

Selbstverständlich kann auch die (Referenz-)Probe als Maske mit Aussparungen ausgebildet sein, und können Bereiche des Referenzfeldes in den Aussparungen angeordnet werden.

Vorzugsweise ist die Schablone oder Maske eine Barcode-Maske, also eine Maske mit rechteckigen, regelmäßig angeordneten Aussparungen.

Referenzfeld, Referenzprobe, Probe bzw. Muster können auch wie folgt erzeugt werden: Die unbehandelte Oberfläche einer zu untersuchenden Probe wird mit einer Maske, welche Aussparungen aufweist, zum Teil abgedeckt und anschließend durch die Aussparungen der Maske dem Umwelteinfluss ausgesetzt. Beispielsweise kann die Oberfläche durch eine Folie, welche transparente und intransparente Bereiche aufweist, bestrahlt werden. Die abgedeckten Bereiche der Oberfläche stellen das (nach der Bestrahlung unveränderte) Referenzfeld dar, während die nicht abgedeckten Bereiche die Bereiche von Referenzprobe (vor Bestrahlung) bzw. Probe (nach Bestrahlung) darstellen. Das erzeugte Muster aus Bereichen von Referenzfeld und Referenzprobe bzw. Probe entspricht dann dem Muster der zur Abdeckung verwendeten Maske und wird durch eine entsprechende Musterfunktion beschrieben. Das Muster kann beispielsweise ein einfaches Streifen- oder Rechteck-Muster sein.

Allgemeiner gesprochen kann also das erste und zweite flächige Muster erzeugt werden, indem man eine Oberfläche mit einer Maske, welche für den Umwelteinfluss durchlässige und undurchlässige Bereiche aufweist, abdeckt und den Umwelteinfluss durch diese Maske auf die Oberfläche einwirken lässt, wobei die von den undurchlässigen Bereichen der Maske abgedeckten Bereiche der Oberfläche das Referenzfeld bilden und die dem Umwelteinfluss ausgesetzten Bereiche der Oberfläche die Referenzprobe (vor Einwirkung des Umwelteinflusses) bzw. Probe (nach Einwirkung des Umwelteinflusses) bilden.

In einem fünften Schritt (v) für das erste Muster zum Zeitpunkt $t_0$ und für das zweite Muster zum Zeitpunkt t mittels eines Detektors die Transmission, Reflexion oder Streuung von Analysestrahlung durch das erste Muster bzw. zweite Muster in Abhängigkeit der Ortskoordinaten (x, y) des ersten bzw. zweiten Musters und der Wellenlänge $\lambda$ der Analysestrahlung detektiert, und so

eine erste Muster-Antwortfunktion $M_0(x, y, \lambda, t_0)$, welche räumlich getrennte Bereiche einer Referenz-Antwortfunktion $R_0(x, y, \lambda, t_0)$ und einer ersten Referenzfeld-Antwortfunktion $RF_0(x, y, \lambda, t_0)$ enthält, für das erste Muster bestimmt,

eine zweite Muster-Antwortfunktion $M_t(x, y, \lambda, t)$, welche räumlich getrennte Bereiche einer Proben-Antwortfunktion $P_t(x, y, \lambda, t)$ und einer zweiten Referenzfeld-Antwortfunktion $RF_t(x, y, \lambda, t)$ enthält, für das zweite Muster bestimmt,

wobei die Funktionen $M_0$ und $M_t$ jeweils die Intensität der transmittierten, reflektierten oder gestreuten Analysestrahlung in Abhängigkeit von den Ortskoordinaten (x, y) des ersten bzw. zweiten Musters und der Wellenlänge $\lambda$ zu den unterschiedlichen Zeitpunkten der Detektion $t_0$ bzw. t wiedergeben.

Zur Analyse von erstem bzw. zweitem Muster werden die Transmission, Reflexion oder Streuung von Analysestrahlung durch das erste bzw. zweite Muster in Abhängigkeit von den Ortskoordinaten (x, y) detektiert. Die Analysestrahlung kann eine diskrete Wellenlänge, beispielsweise die Wellenlänge der CO-Bande bei 5,8 $\mu$m (entsprechend 1720 cm$^{-1}$) aufweisen oder aber einen Wellenlängenbereich umfassen, beispielsweise den gesamten sichtbaren Spektralbereich von 400 bis 800 nm. Die Transmission, Reflexion oder Streuung der Analysestrahlung durch die Probe ist im Allgemeinen von der Wellenlänge der Analysestrahlung abhängig. Es werden somit Antwortfunktion erhalten, welche die Intensität des transmittierten, reflektierten oder gestreuten Analyselichts in Abhängigkeit von den Ortskoordinaten (x, y) und der Wellenlänge $\lambda$ wiedergeben. Diese Antwortfunktionen können für diskrete Wellenlängen $\lambda$ oder für einen oder mehrere Wellenlängenbereiche $\Delta\lambda$ (beispielsweise für den roten, grünen und blauen Bereich des sichtbaren Lichts) bestimmt werden.

Die Wellenlänge der Analysestrahlung bzw. deren spektrale Zusammensetzung richtet sich nach der untersuchten Probe und der vorliegenden Fragestellung. Oftmals wird es sich um Analyselicht im UV-VIS und/oder NIR-Bereich des Spektrums handeln. Soll beispielsweise die Lichtechtheit von Farbmitteln untersucht werden, also die mit dem menschlichen Auge wahrnehmbare Änderung in der Färbung einer behandelten Probe, so wird das Analyselicht im Wesentlichen die spektrale Zusammensetzung von Tageslicht haben bzw. Tageslicht sein. Soll beispielsweise die lichtinduzierte Alterung von Kunststoffen durch Bestimmung der CO-Zahl der Kunststoffe untersucht werden, so wird das Analyselicht NIR-Licht der Wellenlänge um 5,8 $\mu$m sein. Soll die Stabilität von UV-Absorbern untersucht werden, so wird die Analysestrahlung UVA- und/oder UVB-Licht umfassen.

Nach der untersuchten Probe und der Fragestellung richtet sich auch der verwendete Messaufbau. Soll etwa das Glanzverhalten einer Substratoberfläche, beispielsweise einer Lackoberfläche, analysiert werden, so eignet sich hierzu die Verwendung einer telezentrischen Messoptik, die Einflüsse der Streuung aus tieferen Schichten der Probe weitgehend eliminiert. Soll hingegen die Lichtechtheit von Farbmitteln untersucht werden, so eignet sich hierzu die Verwendung eines konfokalen Farbmesssystems, das die störenden Einflüsse des Glanzes weitgehend unterdrückt.

In einer Ausführungsform des erfindungsgemäßen Verfahrens wird die Reflexion des Analyselichts durch eine Substratoberfläche bestimmt. Dabei wird vorzugsweise eine telezentrische Messoptik eingesetzt. In einer weiteren Ausführungsform des erfindungsgemäßen Verfahrens wird die Streuung des Analyselichts durch eine Substratoberfläche detektiert. Dabei wird vorzugsweise ein konfokales Farbmesssystem eingesetzt.

Die Reflexion oder Streuung der Analysestrahlung durch die Substratoberfläche in Abhängigkeit der Ortskoordinaten (x, y) und der Wellenlänge $\lambda$ kann auch mit einem Farbscanner oder einer Digitalkamera detektiert werden.

Die Detektion von radioaktiver oder akustischer Strahlung (Ultraschall) kann mit aus der medizinischen Diagnostik bekannten bildgebenden Verfahren erfolgen. Thermische Infrarotstrahlung kann mit einer Wärmebildkamera detektiert werden.

Um die durch den Umwelteinfluss induzierte Änderung in der Probe besser detektierbar zu machen, kann die Probe einer Nachbehandlung unterzogen werden. Eine Änderung in den hydrophilen oder hydrophoben Eigenschaften einer Probe kann beispielsweise dadurch besser detektierbar gemacht werden, indem die Probe mit Wasserdampf bedampft wird.

Aus den detektierten Intensitätswerten werden die entsprechenden Antwortfunktionen im Allgemeinen mit einem digitalen Bildauswertesystem bestimmt.

In einem sechsten Schritt (vi) wird eine Korrektur Proben-Antwortfunktion $P_t$ derart vorgenommen, dass man mittels der ersten und der zweiten Referenzfeld-Antwortfunktion $RF_0$ und $RF_t$ die detektorbedingten orts-, zeit- und wellenlängenabhängigen Schwankungen aus der Proben-Antwortfunktion $P_t$ eliminiert, wobei man eine korrigierte Probe-Antwortfunktion $P_{t,\,korr}$ erhält.

Die Referenzfeld-Antwortfunktionen $RF_t(x, y, \lambda, t)$ und $RF_0(x, y, \lambda, t_0)$ des Referenzfeldes zum Zeitpunkt t (oder allgemeiner $t_i$, falls eine Messreihe zu mehreren Zeitpunkten $t_i$ durchgeführt wird) bzw. $t_0$ werden gleichzeitig mit der Probe-Antwortfunktion $P_t(x, y, \lambda, t)$ bzw. der Referenz-Antwortfunktion $R_0(x, y, \lambda, t_0)$ gemessen. Die Referenzfeld-Antwortfunktion $RF_t(x, y, \lambda, t)$ bzw. $RF_0(x, y, \lambda, t_0)$ wird nun mit Hilfe geeigneter mathematischer Verfahren in den Ortsbereich der Antwortfunktion $P_t(x, y, \lambda, t)$ bzw. $R_0(x, y, \lambda, t_0)$ fortgesetzt. Hierdurch werden ortsabhängige Schwankungen des Detektors berücksichtigt. Damit steht $RF_t$ beziehungsweise $RF_0$ auch im Bereich der Koordinaten x, y der Antwortfunktionen P zur Verfügung. Die Korrektur von P bezüglich der zeitlichen Schwankungen des Detektors erfolgt dann nach der Rechenvorschrift

$$P_{t,\,korr}(x, y, \lambda, t) = RF_0(x, y, \lambda, t_0) \,/\, RF_t(x, y, \lambda, t) \times P_t(x, y, \lambda, t)$$

oder allgemeiner

$$P_{ti,\,korr}(x, y, \lambda, t_i) = RF_0(x, y, \lambda, t_0) \,/\, RF_{ti}(x, y, \lambda, t_i) \times P_{ti}(x, y, \lambda, t).$$

Bevorzugt ist die Referenzprobe die unbehandelte Probe, deren Antwortfunktion zum Zeitpunkt t = 0 bestimmt wird. Dann wird die oben beschriebene Korrektur für die Antwortfunktionen der behandelten Probe durchgeführt, welche zum Zeitpunkt $t_i$ bestimmt werden.

Auch die Schritte (i) - (vi) können selbstverständlich in jeder beliebigen sinnvollen Reihenfolge durchgeführt werden. So können beispielsweise die Schritte (vi) und (v) oder (iv) - (vi) zunächst für die Referenzprobe durchgeführt werden und anschließend für die Probe, oder umgekehrt.

Aus der korrigierten Probe-Antwortfunktion $P_{t,\,korr}$ und gegebenenfalls der Referenz-Antwortfunktion $R_0$ wird die Änderung der physikalisch messbaren Eigenschaft bestimmt. Hierfür stehen mehrere Möglichkeiten zur Verfügung.

Variante A:

In Schritt (vii) wird jeweils ein Mittelwert aus Werten der korrigierten Proben-Antwortfunktion $P_{t,\,korr}$ und der Referenz-Antwortfunktion $R_0$ gebildet und diese Mittelwerte werden miteinander verglichen. Der Unterschied zwischen den Mittelwerten ist ein Maß für die Änderung der physikalisch messbaren Eigenschaft.

Variante B:

In Schritt (vii) wird eine korrigierte Muster-Antwortfunktion $M_{t,\,korr}$ aus der korrigierten Probe-Antwortfunktion $P_{t,\,korr}$ und der ersten Referenzfeld-Antwortfunktion $RF_0$ gebildet und diese korrigierte Muster-Antwortfunktion $M_{t,\,korr}$ mit der bekannten orts- und wellenlängenabhängigen Musterfunktion $M(x, y, \lambda)$ korreliert, wobei diese Korrelation, welche einen bestimmten numerischen Wert hat ein Maß für die Änderung der physikalisch messbaren Eigenschaft ist.

In einer bevorzugten Ausführungsform dieser Variante B wird in Schritt (vii) zusätzlich aus der Referenz-Antwortfunktion $R_0$ und der ersten Referenzfeld-Antwortfunktion $RF_0$ eine Nullwert-Muster-Antwortfunktion $N_0(x, y, \lambda,$

$t_0$) bestimmt und diese mit der bekannten orts- und wellenlängenabhängigen Musterfunktion M(x, y, λ) korreliert, wobei diese Korrelation den Nullwert der Korrelation darstellt, und die aus der korrigierten Muster-Antwortfunktion $M_{t, korr}$ erhaltene Korrelation um diesen Nullwert korrigiert.

Die Nullwertfunktion wird also an einem Muster aus Referenzprobe und Referenzfeld bestimmt. Die Nulllwert-Muster-Antwortfunktion beziehungsweise die daraus erhaltene Korrelation gibt die Unterschiede zwischen der Referenzprobe und dem Referenzfeld wieder. Auch gibt die Nulllwert-Muster-Antwortfunktion beziehungsweise die Korrelation die durch die Art der Anordnung von Bereichen des Referenzfeldes und der (Referenz)Probe erzeugten Artefakte wieder, die beispielsweise in einem Schattenwurf beim Hinterlegen des Referenzfeldes mit der (Referenz)Probe bestehen können und unabhängig von den Unterschieden zwischen Referenzprobe und Probe beziehungsweise der in der Probe induzierten Eigenschaftsänderung sind.

Streng genommen müssen das Referenzfeld und die Referenzprobe nicht exakt die gleiche Beschaffenheit aufweisen, also beispielsweise nicht aus dem gleichen Material bestehen, da derartige Unterschiede in der Beschaffenheit durch Bestimmung der Nullwert-Muster-Antwortfunktion und der daraus resultierenden Korrelation erfasst und durch einen entsprechenden Korrekturwert (Nullwert der Korrelation) berücksichtigt werden. Um diesen Korrekturwert möglichst klein zu halten, ist es aber bevorzugt, dass Referenzprobe und Referenzfeld zumindest an ihrer Oberfläche eine im Wesentlichen gleiche Beschaffenheit aufweisen.

Variante C:

In Schritt (vii) werden Bereiche der korrigierten Probe-Antwortfunktion $P_{t, korr}$ und Bereiche der Referenz-Antwortfunktion $R_0$ zu einem virtuellen Muster gemischt, welches durch eine orts- und wellenlängenabhängige virtuelle Musterfunktion $M_v(x, y, λ)$ beschrieben wird,
wobei durch das Mischen eine virtuelle Muster-Antwortfunktion $V_t(x, y, λ, t)$ erhalten wird, welche entsprechend der virtuellen Musterfunktion $M_v$ Bereiche der korrigierten Probe-Antwortfunktion $P_{t, korr}$ und Bereiche der Referenz-Antwortfunktion $R_0$ enthält, und durch Korrelationsanalyse die Korrelation der bekannten orts- und wellenlängenabhängigen virtuellen Musterfunktion $M_v(x, y, λ)$ mit der virtuellen Muster-Antwortfunktion $V_t(x, y, λ, t)$ bestimmt, wobei diese Korrelation ein Maß für die Änderung der physikalisch messbaren Eigenschaft ist.

Zur Erzeugung der virtuellen Antwortfunktion werden Bereiche der korrigierten Proben-Antwortfunktion und Bereiche der Referenz-Antwortfunktion zu einem virtuellen Muster gemischt, welches Bereiche beider Funktionen $P_t$ und $R_0$ enthält. Das Muster wird durch eine frei gewählte ortsabhängige und wellenlängenabhängige virtuelle Musterfunktion $M_v(x, y, λ)$ beschrieben. Diese virtuelle Musterfunktion gibt die geometrische Verteilung der Bereiche der Probe-Antwortfunktion und der Referenz-Antwortfunktion innerhalb des virtuellen Musters wieder. Diese kann, muss aber nicht mit der Wellenlänge λ variieren.

Beispielsweise kann das virtuelle Muster ein Barcode-Muster sein, welches aus rechteckigen, länglichen Bereichen der Antwortfunktion und der Referenz-Antwortfunktion zusammengesetzt wird. Das virtuelle Muster kann beispielsweise ein Schachbrettmuster sein, welches aus quadratischen Bereichen der Antwortfunktion und der Referenz-Antwortfunktion zusammengesetzt wird. Das virtuelle Muster kann auch völlig unregelmäßig sein. Entscheidend ist, dass das virtuelle Muster sowohl Bereiche der Probe-Antwortfunktion $P_{t, korr}$ als auch Bereiche der Referenz-Antwortfunktion $R_0$ aufweist, wobei dieses Muster durch eine bekannte, frei gewählte Musterfunktion beschrieben wird.

Das durch die virtuelle Musterfunktion $M_v$ beschriebene virtuelle Muster ist von dem (realen) ersten beziehungsweise zweiten Muster des Schrittes (iv) zu unterscheiden und kann von diesen völlig verschieden sein. Bei letzteren handelt es sich um reale Muster aus Referenzfeld und Probe bzw. Referenzprobe, welche zur Durchführung der oben beschriebenen Referenzfeld-Korrektur zur Eliminierung von zeitlichen und örtlichen DetektorSchwankungen erzeugt wird. Während das reale Muster des Schrittes (iv) ein relativ einfaches Muster sein kann, beispielsweise ein durch eine Schablone mit rechteckigen Aussparungen erzeugtes Muster, und eher praktischen Gesichtspunkten folgt (Herstellbarkeit einer entsprechenden Schablone), kann das virtuelle Muster völlig beliebig sein. Im Allgemeinen wird das virtuelle Muster mit einer Datenverarbeitungsanlage erzeugt.

Bei den oben beschriebenen Varianten B und C wird jeweils eine Korrelationsanalyse durchgeführt. Bei der Korrelationsanalyse wird die Muster-Antwortfunktion, welche die Information aus der Detektion der physikalisch messbaren Eigenschaften enthält, mit der entsprechenden Musterfunktion korreliert. Hierbei kann die auf das reale Muster des Schrittes (iv) zurückgehende korrigierte Muster-Antwortfunktion $M_{t, korr}$ mit der entsprechenden Musterfunktion M (Variante B) oder die virtuelle Muster-Antwortfunktion $V_t$ mit der entsprechenden virtuellen Musterfunktion $M_v$ (Variante C) korreliert werden.

Die Korrelationsanalyse ist ein an sich bekanntes mathematisches Verfahren zur Erkennung von charakteristischen Mustern. Verfahren der Korrelationsanalyse sind in der Literatur ausführlich beschrieben worden. Es wird untersucht, inwieweit die Antwortfunktion des Musters mit einer Vergleichsfunktion korreliert. Dieses Verfahren sei nachstehend für das virtuelle Muster der Variante C grob skizziert. Entsprechendes gilt für das reale Muster der Variante B. Die genaue Ausgestaltung der mathematischen Korrelationsanalyse gehört nicht zum Kern der Erfindung.

Dazu wird eine verallgemeinerte Korrelationsfunktion berechnet:

$$K(\alpha, \beta, x_0, y_0, \lambda, t) = \int\limits_{-\infty}^{\infty} \int\limits_{-\infty}^{\infty} M(\alpha x + x_0, \beta y + y_0, \lambda) \cdot V(x, y, \lambda, t) \, dx \, dy$$

$\alpha$, $\beta$ sind frei wählbare Skalierungsparameter, $x_0$, $y_0$ sind frei wählbare Lageparameter. Die obige Gleichung ist so zu verstehen, dass die Integration über zwei Koordinaten, möglicherweise aber nur über eine Koordinate ausgeführt wird. Die Werte für M und V für Variablen, die den Messbereich überschreiten, werden gleich 0 gesetzt.

Die Korrelationsfunktion gibt Auskunft darüber, inwieweit die Muster-Antwortfunktion $V_t(x, y, \lambda, t)$ mit einer Musterfunktion (Vergleichsfunktion) $M(ax + x_0, \beta y + y_0, \lambda)$ korreliert ist und wie stark sich diese Korrelation ändert, wenn deren Variablen geändert werden, das heißt wie signifikant die Korrelation ist.

Die Wahl der Musterfunktion $M(\alpha x + x_0, \beta y + y_0, \lambda)$ richtet sich nach der zu untersuchenden Fragestellung. Die Vergleichsfunktion beschreibt allgemein die zu erwartende bzw. die gesuchte Eigenschaftsänderung der Probe bzw. der Substratoberfläche durch den Umwelteinfluss, wie sie sich erwartungsgemäß in den Bereichen des realen bzw. virtuellen Musters niederschlägt, die aus Bereichen der Antwortfunktion der (behandelten) Probe gebildet werden. Der Fachmann wird entsprechend der zu untersuchenden Fragestellung eine geeignete Vergleichsfunktion auswählen.

Die Musterfunktion M muss keine explizite Wellenlängenabhängigkeit besitzen. Soll aber beispielsweise eine Farbänderung untersucht werden, so wird die Vergleichsfunktion eine Wellenlängenabhängigkeit aufweisen, die gegebenenfalls unter Berücksichtigung der menschlichen Wahrnehmung gewählt wird.

Die Korrelationsfunktion bildet nur die gewünschten, das heißt die durch den Umwelteinfluss hervorgerufene Veränderung der Probe ab und unterdrückt wirkungsvoll Störeinflüsse wie statistisches Rauschen, Probeninhomogenitäten und Einflüsse von Fremdlicht. Daraus resultiert eine sehr hohe Empfindlichkeit.

Eine bevorzugte Variante der allgemeinen Korrelationsanalyse ist die Fourieranalyse.

In einer Ausführungsform des erfindungsgemäßen Verfahrens ist das virtuelle Muster ein periodisches Muster und dementsprechend die zugehörige Musterfunktion eine periodische Musterfunktion mit einer Ortsfrequenz $\alpha$. Ein periodisches Muster ist beispielsweise ein Barcode-Muster.

Exemplarisch wird nachfolgend ein Verfahren der Korrelationsanalyse zur Bestimmung der Korrelation zwischen der Musterfunktion $M_v(x, y, \lambda)$ und der virtuellen Antwortfunktion $V_t(x, y, \lambda, t)$ beschrieben. Verfahren der Korrelationsanalyse sind an sich bekannt und in der Literatur ausführlich beschrieben worden. Die Erfindung betrifft daher auch nicht die Bereitstellung derartiger mathematischer Verfahren. Die Ausführungen gelten für das reale Muster (Variante B) entsprechend.

Hat die Musterfunktion eine periodische Struktur, so ergeben sich besonders anschauliche Verhältnisse. Wählt man zum Beispiel die Musterfunktion

$$M_V(x, y, \lambda) = \tfrac{1}{2}(1 + \cos(\alpha_0 x)),$$

und möchte anschließend die Lichtechtheit einer Probe bestimmen, so gilt

$$K(\alpha, \beta, x_0, y_0, \lambda, t) = \int\limits_{-\infty}^{\infty} \frac{1}{2} \cdot \left(1 + \cos(\alpha\, x)\right) \cdot V(x, y, \lambda, t) \, dx$$

Damit ist die Korrelationsfunktion bis auf eine Konstante die reelle Fouriertransformation der Antwortfunktion. $\alpha$ kann somit als Ortsfrequenz aufgefasst werden. Ferner zeigt $K(\alpha, \beta, x_0, y_0, \lambda)$ nur bei der Eigenfrequenz $\alpha_0$ einen Beitrag, der von der Bestrahlung hervorgerufen wird. Bei allen anderen Ortsfrequenzen $\alpha \neq \alpha_0$ verschwindet die Korrelationsfunktion. Somit erhält man ein unendlich hohes Ortsfrequenz-Auflösungsvermögen $\alpha_0/\Delta\alpha$.

In der Praxis ist jedoch zu berücksichtigen, dass aufgrund der endlichen Größe des Musters $x_{max}$ die Integration nicht von minus Unendlich bis plus Unendlich durchgeführt werden kann. Ferner wird nicht kontinuierlich gemessen, sondern die Antwortfunktion wird mit einer begrenzten Anzahl von Stützstellen digitalisiert. Aus der Dichte der Stützstellen resultiert eine obere Grenze für die noch messbare Ortsfrequenz. Demgegenüber resultiert aus der endlichen Probengröße ein endliches Ortsfrequenz-Auflösungsvermögen $\alpha_0/\Delta\alpha$, welches gegeben ist durch $\alpha_0/\Delta\alpha = \alpha_0 \cdot x_{max}$.

Dies bedeutet, dass Störungen, hervorgerufen durch statistische Prozesse (Signalrauschen), weniger wirkungsvoll unterdrückt werden als bei unendlich hohem Ortsfrequenz-Auflösungsvermögen. In der Praxis hat sich jedoch gezeigt, dass trotz dieser Einschränkungen das erfindungsgemäße Verfahren im Vergleich zur visuellen Inspektion eine bis zu hundertfach höhere Empfindlichkeit besitzt.

Die so ermittelte Korrelation ist ein quantitatives und von subjektiver Beurteilung unabhängiges Maß für die durch den Umwelteinfluss hervorgerufene Änderung der physikalisch messbaren Eigenschaft der Probe.

Aus der Mustererkennung mittels Korrelationsanalyse resultiert eine sehr hohe Empfindlichkeit der Detektion der durch den Umwelteinfluss in der Probe bzw. auf der Substratoberfläche hervorgerufenen Änderungen. Diese Empfindlichkeit ist sehr viel höher als bei jedem Verfahren, das auf der visuellen Beurteilung von Proben (z. B. anhand von Vergleichsproben) beruht.

In einer Ausführungsform des erfindungsgemäßen Verfahrens werden die Intensitätswerte des gestreuten oder reflektierten Lichts über einen Wellenlängenbereich $\Delta\lambda$ summiert und für mehrere verschiedene Wellenlängenbereiche $\Delta\lambda_1$, $\Delta\lambda_2$, $\Delta\lambda_3$, ... mehrere verschiedene Proben-Antwortfunktionen $P^1(x, y, \Delta\lambda_1)$, $P^2(x, y, \Delta\lambda_2)$, $P^3(x, y, \Delta\lambda_3)$, ... und mehrere verschiedene Referenz-Antwortfunktionen $R^1(x, y, \Delta\lambda_1)$, $R^2(x, y, \Delta\lambda_2)$, $R^3(x, y, \Delta\lambda_3)$ bestimmt und der oben beschriebenen Referenzfeld-Korrektur und Korrelationsanalyse (Varianten B und C) unterzogen. So kann beispielsweise bestimmt werden, inwieweit der Umwelteinfluss sich auf eine bestimmte Eigenschaft der Probe beziehungsweise Substratoberfläche, welche sich in der Änderung der Absorptionseigenschaften der Probe beziehungsweise der Substratoberfläche bei einer bestimmten Wellenlänge oder in einem bestimmten Wellenlängenbereich niederschlägt, auswirkt, während er andere Eigenschaften, welche sich in den Absorptionseigenschaften der Probe beziehungsweise Substratoberfläche bei einer anderen Wellenlänge oder in einem anderen Wellenlängenbereich niederschlagen würden, unberührt lässt.

In einer Ausführungsform des erfindungsgemäßen Verfahrens werden jeweils Antwortfunktion und Referenz-Antwortfunktion für rotes, grünes und blaues Licht durch RGB-Analyse bestimmt. Dies geschieht dadurch, dass die Intensitätswerte des von der Substratoberfläche reflektierten oder gestreuten Lichts für den roten, grünen und blauen Wellenlängenbereich, also für den Wellenlängenbereich von beispielsweise 600 - 700 nm(rot), 500 - 600 nm (grün) und 400 - 500 nm (blau) summiert werden und eine entsprechende spezifische Antwortfunktion und spezifische Referenz-Antwortfunktion für jeden dieser Wellenlängenbereiche ermittelt wird. Soll beispielsweise die Lichtechtheit von Farbmitteln untersucht werden, so kann auf diese Weise ermittelt werden, wie sich der Rot-, Grün- und BlauAnteil des von der Farbmittel-Probe gestreuten Lichts nach Bestrahlung (beispielsweise mit Sonnenlicht) ändert und wie sich dadurch der Farbeindruck des Farbmittels ändert.

Beispielsweise kann eine Substratoberfläche durch eine Gitterfolie bestrahlt werden. Die intransparenten Bereiche der Gitterfolie ergeben das Referenzfeld, während die transparenten Bereiche die (Referenz)Probe ergeben. Nach Bestrahlung wird die Gitterfolien entfernt und die Substratoberfläche mit einem Scanner eingescannt. Die R-, G-, B-Signale der bestrahlten Substratoberfläche werden anschließend nach dem im Folgenden beschriebenen Verfahren einer eindimensionalen Fouriertransformation unterworfen. Die vom Scanner gemessenen Intensitäten seien mit $S_j(k, m)$ bezeichnet. Hierbei bezeichnet der Index j die R-, G-, B-Farben (rot, grün und blau). Demgegenüber indizieren die Größen k und m den Ort, an dem die Intensität gemessen wurde. Die von k bzw. m indizierte Richtung wird im Folgenden als Bildzeile bzw. als Bildspalte bezeichnet. Mit Hilfe der mathematischen Operation

$$P_j(k', m) = \sqrt{\left[\int\limits_{alle\,k} S_j(k,m) \cdot \sin(2 \cdot \pi \cdot k' \cdot k) \cdot dk\right]^2 + \left[\int\limits_{alle\,k} S_j(k,m) \cdot \cos(2 \cdot \pi \cdot k' \cdot k) \cdot dk\right]^2}$$

wird für jede Bildzeile das Powerspektrum $P_j(k', m)$ berechnet.

Die so für jede Bildzeile erhaltenen Powerspektren werden über alle Bildspalten gemittelt.

$$\overline{P_j(k')} = \frac{\sum\limits_{alle\,Bildzeilen} P_j(k',m)}{Anzahl\ der\ Bildzeilen}$$

Anschließend wird das gemittelte Powerspektrum $\overline{P_j(k')}$ über die Ortsfrequenz k' aufgetragen. Photochemisch induzierte Veränderungen in der Farbe der Substratoberfläche sind in den Kanälen R, G, B dadurch eindeutig zu erkennen, dass bei der durch das Foliengitter festgelegten Ortsfrequenz eine deutlich höhere Intensität des gemittelten Powerspektrums festzustellen ist. Die Höhe dieser Intensität in den einzelnen Kanälen R, G, B ist ein Maß für die photochemisch erzeugte Farbänderung.

Zur eingehenderen Untersuchung der Probe wird das Ergebnis der beschriebenen mathematischen Operation genauer betrachtet. Neben dem Powerspektrum wird nun auch das Vorzeichen von

$$V_j(k',m) = \int\limits_{alle\,k} S_j(k,m) \cdot \cos(2 \cdot \pi \cdot k' \cdot k) \cdot dk$$

berücksichtigt. Zur Rauschunterdrückung wird hierbei auch eine Mittlung über alle gemessenen Bildzeilen

$$V_j(k')) = \frac{\sum\limits_{alle\,Bildzeilen} V_j(k',m))}{Anzahl\ der\ Bildzeilen}$$

vorgenommen. $V_j(k')$ gibt Auskunft darüber, ob der Umwelteinfluss zu einer Zunahme ($V_j(k') > 0$) oder zu einer Abnahme ($V_j(k') < 0$) des vom Scanner gemessenen Signals geführt hat.

Substratoberflächen, die mit dem vorliegenden Verfahren untersucht werden können, sind die Oberflächen beliebiger Materialien, beispielsweise die Oberflächen von Kunststoffen, Holz, Lack und Papier.

Es können Änderungen von Eigenschaften der Substratmaterialien selbst, beispielsweise von Kunststoffen untersucht werden, oder Änderungen von Eigenschaften von Stoffen, die in die Substratmaterialien eingebracht oder auf diese aufgetragen worden sind, beispielsweise von Farbmitteln, UV-Absorbern, Stabilisatoren, kosmetischen Formulierungen.

Ein Aspekt der vorliegenden Erfindung ist die Verwendung des erfindungsgemäßen Verfahrens zur Untersuchung der thermisch oder lichtinduzierten Alterung von Kunststoffen durch ortsaufgelöste Detektion der CO-Bande bei 5,8 $\mu$m. Hierzu wird, wie unter anderem in DIN 53383 beschrieben, das Verhältnis der Extinktion bei 5,8 $\mu$m zu einer bestimmten Referenzextinktion, die für den Kunststoff Polyethylen beispielsweise bei 4,95 $\mu$m (entsprechend 2020 cm$^{-1}$) liegt, gebildet.

Ebenso kann die thermisch oder lichtinduzierte (photooxidative) Alterung beliebiger weiterer Stoffe untersucht werden. Ein weiterer Aspekt der Erfindung ist daher allgemein die Verwendung des erfindungsgemäßen Verfahrens zur Untersuchung der lichtinduzierten oder photooxidativen Alterung von Stoffen. Zu untersuchende Stoffe sind beispielsweise mit Farbmitteln gefärbte oder ungefärbte Kunststoffe, Lacke, Metalle, Textilien, Papiere, Holzartikel oder Baustoffe.

Die Detektion der lichtinduzierten Alterung erfolgt über geeignete spektroskopische Banden des betreffenden Stoffes. Diese kann im IR- oder UV-VIS-Bereich des Spektrums liegen.

Ein Aspekt der vorliegenden Erfindung ist auch die Verwendung des erfindungsgemäßen Verfahrens zur Bestimmung der Lichtechtheit von Farbmitteln. Farbmittel können Farbstoffe oder Pigmente sein. Dabei kann so vorgegangen werden, dass eine Substratoberfläche, welche das Farbmittel enthält, mit vorzugsweise Sonnenlicht oder Licht aus einem Sonnensimulator bestrahlt wird. Geeignete Sonnensimulatoren und Lichtquellen, welche ein dem Sonnenlicht entsprechendes Emissionsspektrum aufweisen, sind dem Fachmann bekannt und umfassen beispielsweise eine Xenon-Lampe. Die Probe kann auch in Freilandversuchen mit Sonnenlicht direkt oder indirekt mittels eines Systems von Spiegeln durch eine geeignete witterungsbeständige Metallmaske bestrahlt werden. Die Bestrahlungsintensität beträgt für UV-Licht im Wellenlängenbereich bis 400 nm beispielsweise von 20 bis 2000 W/m$^2$ und für Licht im sichtbaren Spektralbereich von 400 bis 800 nm von 500 bis 5000 W/m$^2$, insbesondere beträgt sie für UV-Licht ca. 50 W/m$^2$ und entspricht damit der Strahlungsintensität von natürlichem Sonnenlicht. Die Bestrahlungsdauer (Einwirkungszeit $\Delta$t) kann von einigen Sekunden bis zu mehreren Jahren betragen. Für sehr lichtechte bzw. witterungsbeständige Proben beträgt sie im Allgemeinen eine Woche bis einige Monate. Das erfindungsgemäße Verfahren zur Bestimmung der Lichtechtheit von Farbmitteln zeichnet sich dadurch aus, dass schon eine verhältnismäßig kurze Bestrahlungsdauer bei natürlicher Strahlungsintensität ausreichend ist, um die Farbänderung der Probe quantitativ detektierbar zu machen. Nach Bestrahlung werden die bestrahlte Substratoberfläche und das Referenzfeld mit einem Scanner eingescannt oder mit einer Digitalkamera aufgenommen. Ferner werden die Oberfläche einer unbestrahlten Referenzprobe und das Referenzfeld eingescannt oder mit einer Digitalkamera aufgenommen. Anschließend wird mit einer Bildauswerteelektronik vorzugsweise eine RGB-Analyse durchgeführt und werden die Antwortfunktionen für rotes, grünes und blaues Licht sowie die entsprechenden Referenz-Antwortfunktionen für die unbestrahlte Referenzprobe bestimmt und der Referenzfeld-Korrektur unterworfen. Die korrigierten Probe-Antwortfunktionen für rotes, grünes und blaues Licht sowie die entsprechenden Referenz-Antwortfunktionen werden zu virtuellen Mustern mit bekannter Musterfunktion zusammengesetzt, wobei für jede der Farben Rot, Grün und Blau eine virtuelle Antwortfunktion resultiert (Variante C). Diese werden schließlich mit der bekannten Musterfunktion des virtuellen Musters korreliert, wobei als Korrelationsanalyse vorzugsweise eine Fourieranalyse durchgeführt wird. Der Peak der Korrelationsfunktion für rotes, grünes bzw. blaues Licht bei der Ortsfrequenz des Musters entspricht *quantitativ* der Änderung des roten, grünen bzw. blauen Farbanteils in dem von der Substratoberfläche gestreuten Licht, die auf die Bestrahlung zurückzuführen ist. Entsprechend kann eine Korrelationsanalyse an dem realen Muster aus Referenzfeld und (Referenz)Probe durchgeführt werden (Variante B). Dieses reale Muster kann durch Bestrahlung oder Bewitterung durch eine Maske erzeugt werden, wobei die abgedeckten Bereiche das Referenzfeld darstellen, oder durch Abdeckung der unbestrahlten bzw. bestrahlten Probe mit einer (Referenzfeld-)Schablone, entsprechend einer der weiter oben beschriebenen Varianten.

Ein weiterer Aspekt der Erfindung ist die Verwendung des erfindungsgemäßen Verfahrens zur Bestimmung der Änderung des Glanzverhaltens einer Substratoberfläche. Zu untersuchende Substratoberflächen sind beispielsweise Lackoberflächen, vorzugsweise die von Autolacken. Beispielsweise kann untersucht werden, inwieweit der Umwelteinfluss zu einer mechanischen Schädigung der Substratoberfläche, welche sich in einer Änderung des Glanzverhaltens der Substratoberfläche niederschlägt, führt. Beispielsweise können sich in einer Lackschicht Risse oder Hohlräume bilden. Zur Detektion solcher Veränderungen wird die Reflektion von Analyselicht mit Hilfe einer telezentrischen Beleuchtungs- und Detektionsoptik gemessen. Durch die Verwendung einer telezentrischen Messanordnung wird sichergestellt, dass die Probe mit parallelem Analyselicht beleuchtet wird und nur paralleles Licht detektiert wird. Dadurch werden ausschließlich Änderungen im Glanzverhalten der Probe detektiert und mögliche Veränderungen in der Farbe der Probe werden unterdrückt.

Ein weiterer Aspekt des erfindungsgemäßen Verfahrens ist die Diagnose von allergischen Hautirritationen der menschlichen oder tierischen Haut, welche durch Umwelteinflüsse hervorgerufen wird, beispielsweise durch kosmetische Formulierungen oder allgemein durch allergene Stoffe. Durch das erfindungsgemäße Verfahren ist eine Früherkennung der allergischen Hautirritation möglich, noch lange bevor die Hautirritation mit dem Auge wahrnehmbar ist.

Ein weiterer Aspekt des erfindungsgemäßen Verfahrens ist die Untersuchung der Wirksamkeit von im Ackerbau eingesetzten Landwirtschaftschemikalien wie Düngemitteln, Fungiziden, Herbiziden und Insektiziden. Die Substratoberfläche ist hier ein Teil der Erdoberfläche, der mit Nutzpflanzen bebaut ist, der Umwelteinfluss ist das Einbringen der Chemikalien in den Boden bzw. das Aufbringen der Chemikalien auf die Nutzpflanzen. Von dem behandelten Feld und einem unbehandelten Feld wird ein Luftbild aufgenommen, welche digital verarbeitet werden und, gegebenenfalls nach einer RGB-Analyse, zu einem virtuellen Muster zusammengesetzt werden. Dieses wird einer Korrelationsanalyse unterworfen.

Weitere Aspekte der Erfindung sind die Verwendung des erfindungsgemäßen Verfahrens zur Untersuchung der Witterungsbeständigkeit von Stoffen, der Chemikalienbeständigkeit von Stoffen oder der Abriebsfestigkeit von Beschichtungen.

Beispielsweise kann das erfindungsgemäße Verfahren in Verbindung mit den in den einschlägigen Normen für die Bewitterung mit künstlichem Tageslicht oder für die direkte Bewitterung beschriebenen Methoden eingesetzt werden. Einschlägige Normen sind beispielsweise ISO 4892 (1994) für Kunststoffe, ISO 11341 (1994) für Lacke und Anstrichstoffe, ISO 11507 (1997) für Beschichtungen in Geräten, ISO 3917 (1999) für Straßenfahrzeuge-Sicherheitsscheiben, ISO 11431 (2002) für Hochbau-Fugendichtstoffe, ISO 105-B02 (1994) für Textilien-Farbechtheitsprüfungen und ISO 105-B04 (1994) für Textilien-Farbechtheit-Bewitterung sowie ASTM G7, ISO 877, ISO 2810, ASTM D4141C (Black Box) und ASTM G24 (Unter Glas Belichtung) für direkte Bewitterung.

So können ohne weiteres unter anderem die nachstehenden Bewitterungs- bzw. Belichtungsgeräten und Boxen vorteilhaft eingesetzt werden:

- alle kommerziell bereits erhältlichen Geräten für künstliche Belichtung bzw. Bewitterung (siehe Beispiele);

- bei der Freilandbewitterung beispielsweise die "Black Boxes" (z.B. der Fa ATLAS);

- Belichtungskammern für Unter-Glas-Belichtung (z.B. der Fa ATLAS);

- Bewitterungsvorrichtungen mit automatischer Nachführung für Sonnengang, z.B. IP/DP-Box der Fa ATLAS in Arizona und Florida;

- Bewitterungsanlagen mit beschleunigter Beregnung und Sonnenbelichtung durch geeignete Spiegelsysteme (z.B. EMMA/EMMAQUA der Fa. ATLAS).

Die Erfindung wird durch die nachstehenden Beispiele näher erläutert.

**Beispiele**

Beispiel 1:

Eine 6 cm x 10 cm große Lackprobe der BASF AG mit einer 1 : 5-Aufhellung von P.R. 63:1 wurde vor Belichtung nach unten auf die Objektscheibe eines Scanners ARTIXSCAN der Fa. Mikrotec gelegt und mit einer Auflösung von 150 dpi mit 48 Bit Farbtiefe eingescannt.

Anschließend wurde eine Transparentfolie mit den gleichen Abmessungen mit Hilfe eines Ink-Jet-Druckers HP 2000 C im linken und im rechten Drittel der Folie jeweils mit einem 2 cm breiten und 10 cm langen schwarzen, intransparenten Balken bedruckt. Die Folie wurde auf der Lackprobe so befestigt, dass durch die beiden äußeren schwarzen Streifen genau zwei Drittel der Lackprobe abgedeckt wurden.

Die Lackprobe mit Folie wurden in einem Suntester XLS Plus der Fa. ATLAS unter Outdoor-Bedingungen insgesamt 300 Minuten belichtet. In regelmäßigen Zeitabständen wurde die Lackprobe aus dem Belichtungsgerät herausgenommen, die Folie entfernt und die Lackprobe mit der belichteten Seite nach unten auf die Objektscheibe des Scanners gelegt und mit den gleichen Geräteparametern wie beim Scan-Vorgang vor Belichtung eingescannt.

Die R-, G-, B-Signale der bestrahlten Lackprobe wurden anschließend mittels der oben beschriebenen Referenzfeld-Korrektur gegen den Scan vor der ersten Belichtung der Lackprobe korrigiert, wobei die während der Belichtung schwarz abgedeckten beiden äußeren Drittel der Lackprobe als Referenzfeld, der innere unbelichtete Streifen als Referenzprobe und der innere belichtete Streifen die Probe bildeten.

Die so ermittelten korrigierten Reflexionswerte des mittleren Drittels der Lackprobe (Probe) wurden, wie oben beschrieben, mit Hilfe der Reflexionswerte des mittleren Drittels vor der Belichtung (Referenzprobe) mit einem Personalcomputer zu einer virtuellen Antwortfunktion mit einer Ortsfrequenz von 3/mm gemischt. Eine eindimensionale Fouriertransformation unter Berücksichtigung der Phase liefert die durch den Belichtungsvorgang hervorgerufenen Veränderungen der Reflektivitäten für die Kanäle R, G und B.

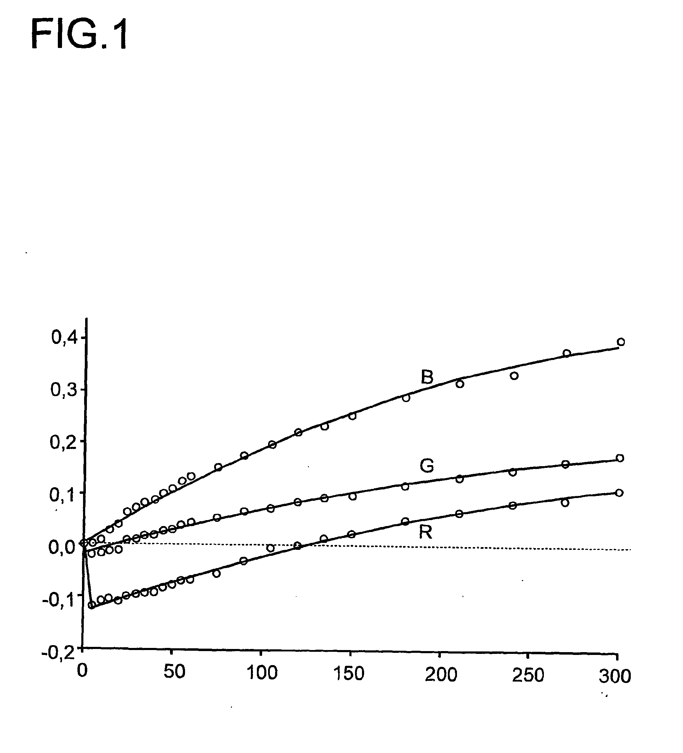

Diese Analyse wurde nach jedem Belichtungsintervall durchgeführt. Die strahlungsinduzierten, um die Schwankungen des Scanners bereinigten Veränderungen der Reflexionswerte der Probe wurden so für verschiedene Bestrahlungszeiten $t_i$ bestimmt und gegen die Zeit aufgetragen. Das Ergebnis ist in Figur 1 wiedergegeben. Dabei ist auf der Abszisse die Bestrahlungszeit in Minuten und auf der Ordinate die Änderung der Reflektivität in % aufgetragen.

Man beobachtet in allen drei Kanälen R, G und B eine monoton steigende Erhöhung der Reflektivitäten mit zunehmender Bestrahlungszeit. Dies entspricht einer Aufhellung der belichteten Probe. Der steile Abfall der Reflektivität im Rotkanal bereits nach wenigen Minuten wurde in mehreren Experimenten reproduziert. Die minimale Bestrahlungszeit für einen mit dem Auge deutlich sichtbaren Aufhelleffekt liegt bei diesem Beispiel bei etwa 600 Minuten. Dies demonstriert die sehr hohe Empfindlichkeit der Methode. Die einzelnen Messpunkte weichen nur um etwa 0.01 bis 0.03 % von den durch Regressionsanalyse an die Messpunkte angepassten Kurven ab.

Beispiel 2:

Es wurde wie in Beispiel 1 beschrieben verfahren, als Referenzfeld aber eine Schablone aus einem mit dem Pigment P.R. 63:1 lackierten Blech mit den Abmessungen 20 x 9 cm und einer Dicke von 2 mm, welches 4 regelmäßig angeordneten rechteckigen Aussparungen mit den Abmessungen 2,5 x 7 cm aufwies, verwendet. In diese Schablone wurden kleinere Probenbleche mit denselben Abmessungen, welche in gleicher Weise mit dem Pigment P.R. 63:1 lackiert waren, als Referenz(Probe) passgenau eingelegt.

Die vier Probenbleche P waren identisch, wurden gemeinsam belichtet, und nach jedem Zeitintervall in die Aussparungen eingelegt und zusammen mit der Referenzfeld-Schablone eingescannt. Das Referenzfeld R wurde zu diesem Zweck mit der lackierten Seite nach unten fest auf dem Scannerglas moniert. Die Auswertung der Scannersignale (R-, G-, B-Signale) erfolgte wie in Beispiel 1.

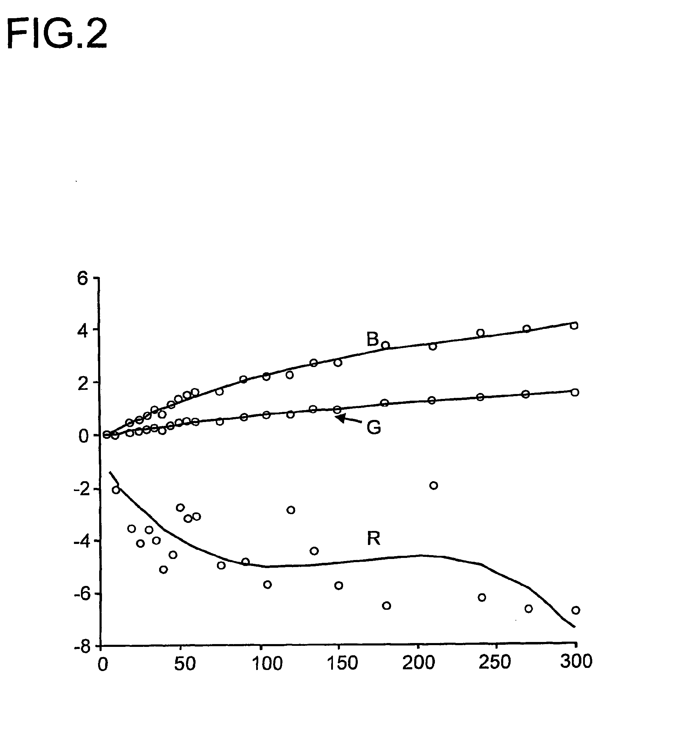

Die Ergebnisse sind in Figur 2 wiedergegeben. Hierbei ist auf der Abszisse die Bestrahlungszeit in Minuten und auf der Ordinate die Änderung der Reflektivität in % aufgetragen.

Da die einzelnen Probenbleche nicht durch eine Folie belichtet wurden, beobachtet man im Blau- und Grünkanal eine etwas stärkere lichtinduzierte Aufhellung mit zunehmender Bestrahlungszeit. Im Rotkanal allerdings beobachtet man eine Abnahme der Reflektivität (Abdunkelung) mit zunehmender Bestrahlungszeit, wobei die Messpunkte deutlich mehr streuen als im Beispiel 1. Die Streuung dieser Messpunkte beeinträchtigt aber nicht die Empfindlichkeit der Methode, da die erst nach viel längerer Bestrahlungszeit (von deutlich mehr als 300 min) visuell wahrnehmbaren lichtinduzierten Farbänderungen der Lackproben im wesentlichen auf die Änderungen der Reflektivität im Bereich der Kanäle Blau und Grün, welche im Bereich der Absorption der Lackpigmente liegen, zurückzuführen sind.

Beispiel 3:

Es wurde wie in Beispiel 2 verfahren und die gleiche Schablone wie in Beispiel 2 als Referenzfeld verwendet. Diese war mit einem Prüflack der BASF mit einer Aufhellung von P.B.15:3 lackiert. Anstelle der 4 kleinen Lackproben wurde aber ein einziges großes Probenblech mit den Abmessungen der Referenzfeld-Schablone unter Outdoor-Bedingungen belichtet. Bei jedem Scan-Vorgang wurde das Probenblech mit der lackierten Seite auf die Referenzfeld-Schablone gelegt. Der Abstand der Probenoberfläche von der Scannerscheibe betrug, der Dicke der Schablone entsprechend, 2 mm. Um die durch den unterschiedlichen Abstand von Referenzfeld und Probe von der Scannerscheibe induzierten Effekte (Artefakte) zu eliminieren, wurde die oben beschriebenen Nullwert-Korrektur durchgeführt. Ansonsten entsprach die Auswertung der Messsignale den Beispielen 1 und 2.

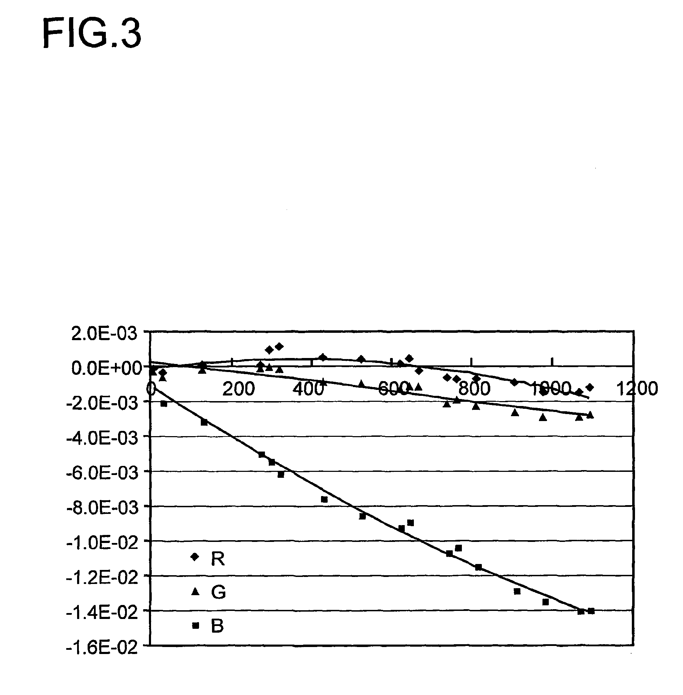

Die Ergebnisse sind in Figur 3 wiedergegeben. Hierbei ist auf der Abszisse die Bestrahlungszeit in Stunden und auf der Ordinate die relative Änderung der Reflektivität (1 = 100%) aufgetragen.

Man beobachtet im Wesentlichen eine Abdunkelung des Prüflackes mit zunehmender Belichtung durch Abnahme der Reflektivität im Blaukanal. Die Abdunkelung ist ab ca. 1200 Stunden Bestrahlungszeit auch visuell zu erkennen. Die hohe Messgenauigkeit dieser Methode gestattet die Vorhersage dieses visuell wahrnehmbaren Effektes durch Extrapolation bereits nach einer viel kürzeren Bestrahlungszeit.

Beispiel 4:

Man verfährt wie in Beispiel 3, führt aber an Stelle der Belichtung eine Schnellbewitterung in einem kommerziellen Bewitterungsgerät (W.O.M CI 35 A der Firma ATLAS) nach der Prüfmethode SAE 1960, CAM 180 durch.

Eine Umrechnung der bewitterungsbedingten Reflektivitätsänderungen in CIELAB-Farbkoordinaten liefert die in der Tabelle 4 dargestellten Ergebnisse:

Auf der Abszisse ist die Bewitterungszeit in Stunden aufgetragen. Auf der Ordinate sind aufgetragen:

| | |
|---|---|
| + + + +: | Chromaänderung ($\Delta C$) |
| □ □ □ □: | Farbtonänderung ($\Delta H$) |
| ○ ○ ○ ○: | Farbabstand ($\Delta E76$) |
| $\Delta \Delta \Delta \Delta$: | Helligkeitsänderung ($\Delta L$) |

Die hohe Genauigkeit der erfindungsgemäßen Methode gestattet auch hier die Vorhersage von im allgemeinen erst nach 1000 bis 2000 Bewitterungsstunden visuell wahrnehmbaren Effekten durch Extrapolation der bei viel kürzeren Bewitterungszeiten erhaltenen Werte.

**Patentansprüche**

1. Verfahren zur Detektion von Unterschieden zwischen den physikalisch messbaren Eigenschaften einer Probe P gegenüber einer Referenzprobe R, bei dem man

   (i) eine Probe P bereitstellt,
   (ii) eine Referenzprobe R bereitstellt,
   (iii) ein flächiges Referenzfeld RF bereitstellt,
   (iv) ein erstes flächiges Muster aus Bereichen der Referenzprobe R und des Referenzfeldes RF und ein zweites flächiges Muster aus Bereichen der Probe P und des Referenzfeldes RF erzeugt, wobei das erste und zweite Muster durch eine orts- und wellenlängenabhängige Musterfunktion $M(x, y, \lambda)$ beschrieben werden,
   (v) für das erste Muster zu einem frei wählbaren Zeitpunkt $t_0$ und für das zweite Muster zum Zeitpunkt t mittels eines Detektors die Transmission, Reflexion oder Streuung von Analysestrahlung durch das erste Muster bzw. zweite Muster in Abhängigkeit der Ortskoordinaten (x, y) des ersten bzw. zweiten Musters und der Wellenlänge $\lambda$ der Analysestrahlung detektiert, und so
   eine erste Muster-Antwortfunktion $M_0(x, y, \lambda, t_0)$, welche räumlich getrennte Bereiche einer Referenz-Antwortfunktion $R_0(x, y, \lambda, t_0)$ und einer ersten Referenzfeld-Antwortfunktion $RF_0(x, y, \lambda, t_0)$ enthält, für das erste Muster bestimmt, eine zweite Muster-Antwortfunktion $M_t(x, y, \lambda, t)$, welche räumlich getrennte Bereiche einer Proben-Antwortfunktion $P_t(x, y, \lambda, t)$ und einer zweiten Referenzfeld-Antwortfunktion $RF_t(x, y, \lambda, t)$ enthält, für das zweite Muster bestimmt, wobei die Funktionen $M_0$ und $M_t$ jeweils die Intensität der transmittierten, reflektierten oder gestreuten Analysestrahlung in Abhängigkeit von den Ortskoordinaten (x, y) des ersten bzw. zweiten Musters und der Wellenlänge $\lambda$ zu den unterschiedlichen Zeitpunkten der Detektion $t_0$ bzw. t wiedergeben,

(vi) eine Korrektur der Proben-Antwortfunktion $P_t$ derart vornimmt, dass man mittels der ersten und der zweiten Referenzfeld-Antwortfunktion $RF_0$ und $RF_t$ die detektorbedingten orts-, zeit- und wellenlängenabhängigen Schwankungen aus der Proben-Antwortfunktion $P_t$ eliminiert, wobei man eine korrigierte Proben-Antwortfunktion $P_{t,\,korr}$ erhält,

(vii) aus der korrigierten Proben-Antwortfunktion $P_{t,\,korr}$ und der Referenz-Antwortfunktion $R_0$ die Änderung der physikalisch messbaren Eigenschaft bestimmt.

2. Verfahren nach Anspruch 1, **dadurch gekennzeichnet, dass** man in Schritt (vü) jeweils einen Mittelwert aus Werten der korrigierten Proben-Antwortfunktion $P_{t,\,korr}$ und der Referenz-Antwortfunktion $R_0$ bildet und miteinander vergleicht.

3. Verfahren nach Anspruch 1, **dadurch gekennzeichnet, dass** man in Schritt (vii) eine korrigierte Muster-Antwortfunktion $M_{t,\,korr}$ aus der korrigierten Proben-Antwortfunktion $P_{t,\,korr}$ und der ersten Referenzfeld-Antwortfunktion $RF_0$ bildet und die korrigierte Muster-Antwortfunktion $M_{t,\,korr}$ mit der bekannten orts- und wellenlängenabhängigen Musterfunktion $M(x, y, \lambda)$ korreliert, wobei diese Korrelation ein Maß für die Änderung der physikalisch messbaren Eigenschaft ist.

4. Verfahren nach Anspruch 3, **dadurch gekennzeichnet, dass** man in Schritt (vii) zusätzlich aus der Referenz-Antwortfunktion $R_0$ und der ersten Referenzfeld-Antwortfunktion $RF_0$ eine Nullwert-Muster-Antwortfunktion $N_0\,(x, y, \lambda, t_0)$ bestimmt und diese mit der bekannten orts- und wellenlängenabhängigen Musterfunktion $M(x, y, \lambda)$ korreliert, wobei diese Korrelation den Nullwert der Korrelation darstellt, und die aus der korrigierten Muster-Antwortfunktion $M_{t,\,korr}$ erhaltene Korrelation um diesen Nullwert korrigiert.

5. Verfahren nach Anspruch 1, **dadurch gekennzeichnet, dass** man in Schritt (vii) Bereiche der korrigierten Proben-Antwortfunktion $P_{t,\,korr}$ und Bereiche der Referenz-Antwortfunktion $R_0$ zu einem virtuellen Muster mischt, welches durch eine orts- und wellenlängenabhängige virtuelle Musterfunktion $M_v(x, y, \lambda)$ beschrieben wird, wobei durch das Mischen eine virtuelle Muster-Antwortfunktion $V_t(x, y, \lambda, t)$ erhalten wird, welche entsprechend der virtuellen Musterfunktion $M_v$ Bereiche der korrigierten Probe-Antwortfunktion $P_{t,\,korr}$ und Bereiche der Referenz-Antwortfunktion $R_0$ enthält, und durch Korrelationsanalyse die Korrelation der bekannten orts- und wellenlängenabhängigen virtuellen Musterfunktion $M_v(x, y, \lambda)$ mit der virtuellen Muster-Antwortfunktion $V_t(x, y, \lambda, t)$ bestimmt wird, wobei diese Korrelation ein Maß für die Änderung der physikalisch messbaren Eigenschaft ist.

6. Verfahren nach einem der Ansprüche 1 - 5, **dadurch gekennzeichnet, dass** das Referenzfeld die Probe bzw. Referenzprobe umgibt oder durchdringt.

7. Verfahren nach einem der Ansprüche 1 - 6, **dadurch gekennzeichnet, dass** der Unterschied zwischen der physikalisch messbaren Eigenschaften der Probe P und der Referenzprobe R **dadurch** hervorgerufen wird, dass die Probe P einem Umwelteinfluss ausgesetzt wird, und die Referenzprobe eine entsprechende Probe ist, die nicht dem Umwelteinfluss ausgesetzt wird.

8. Verfahren nach Anspruch 7, **dadurch gekennzeichnet, dass** der Umwelteinfluss ausgewählt ist aus der Einwirkung mechanischer Kräfte, der Einwirkung von Chemikalien, der Einwirkung von Gasen, der Einwirkung von Mikroorganismen, der Einwirkung von radioaktiver Strahlung, der Einwirkung von Schallwellen und der Einwirkung von Wärme.

9. Verfahren nach Anspruch 7, **dadurch gekennzeichnet, dass** der Umwelteinfluss durch eine Bewitterung der Probe bewirkt wird.

10. Verfahren nach einem der Ansprüche 1 bis 9, **dadurch gekennzeichnet, dass** man das erste flächige Muster aus Bereichen der Referenzprobe R und des Referenzfeldes RF und das zweite flächiges Muster aus Bereichen der Probe P und des Referenzfeldes RF erzeugt, indem man das Referenzfeld als Schablone mit mindestens einer Aussparung ausgestaltet und die Referenzprobe R bzw. die Probe P hinter der mindestens einen Aussparung oder in der mindestens einen Aussparungen der Schablone anordnet.

11. Verfahren nach einem der Ansprüche 1 bis 10, **dadurch gekennzeichnet, dass** man das erste und zweite flächige Muster erzeugt, indem man eine Oberfläche mit einer Maske, welche für den Umwelteinfluss durchlässige und undurchlässige Bereiche aufweist, abdeckt und den Umwelteinfluss durch diese Maske auf die Oberfläche einwirken lässt, wobei die von den undurchlässigen Bereichen der Maske abgedeckten Bereiche der Oberfläche das Referenzfeld bilden und die dem Umwelteinfluss ausgesetzten Bereiche der Oberfläche die Referenzprobe (vor Einwirkung des Umwelteinflusses) bzw. Probe (nach Einwirkung des Umwelteinflusses) bilden.

**12.** Verfahren nach einem der Ansprüche 1 bis 11, **dadurch gekennzeichnet, dass** man in Schritt (iv) die Transmission, Reflektion oder Streuung von Analyselicht im UV-VIS und/oder NIR-Bereich bestimmt.

**13.** Verfahren nach Anspruch 12, **dadurch gekennzeichnet, dass** man die Transmission, Reflektion oder Streuung von Analysestrahlung für eine Mehrzahl von Wellenlängenbereichen $\Delta\lambda$ bestimmt und für jeden Wellenlängenbereiche $\Delta\lambda$ wellenlängenspezifische Antwortfunktionen bestimmt.

**14.** Verfahren nach Anspruch 13, **dadurch gekennzeichnet, dass** man die Reflexion oder Streuung des Analyselichts in Abhängigkeit von den Ortskoordinaten (x, y) mit einem Farbscanner detektiert.

**15.** Verfahren nach Anspruch 13, **dadurch gekennzeichnet, dass** man die Reflexion oder Streuung des Analyselichts in Abhängigkeit von den Ortskoordinaten (x, y) mit einer Digitalkamera detektiert.

**16.** Verfahren nach einem der Ansprüche 1 bis 15, **dadurch gekennzeichnet, dass** das erste und zweite Muster oder das virtuelle Muster periodische Muster mit einer Ortsfrequenz $\alpha$ sind.

**17.** Verwendung des Verfahrens nach einem der Ansprüche 1 bis 7 zur Untersuchung der Abriebsfestigkeit von Beschichtungen auf einem Substrat.

**18.** Verwendung des Verfahrens nach einem der Ansprüche 1 bis 7 zur Detektion von Unterschieden zwischen Probe und Referenzprobe bei der Qualitätskontrolle.

**Claims**

**1.** Method for the detection of differences between the physically measurable properties of a sample P and of a reference sample R, in which

(i) a sample P is provided,
(ii) a reference sample R is provided,
(iii) a two-dimensional reference field RF is provided,
(iv) a first two-dimensional pattern is produced from regions of the reference sample R and from the reference field RF, and a second two-dimensional pattern is produced from regions of the sample P and of the reference field RF, the first and second patterns being described by a location-dependent and wavelength-dependent pattern function M(x, y, $\lambda$),
(v) for the first pattern, at a freely selectable time to, and for the second pattern, at the time t, by means of a detector, the transmission, reflection or scattering of analytical radiation by the first pattern and the second pattern, respectively, is detected as a function of the local coordinates (x, y) of the first and second pattern, respectively, and of the wavelength $\lambda$, of the analytical radiation and thus
a first pattern response function $M_0(x, y, \lambda, t_0)$, which contains physically separated regions of a reference response function $R_0(x, y, \lambda, t_0)$ and of a first reference field response function $RF_0(x, y, \lambda, t_0)$, is determined for the first pattern,
a second pattern response function $M_t(x, y, \lambda, t)$, which contains physically separated regions of a sample response function $P_t(x, y, \lambda, t)$ and of a second reference field response function $RF_t(x, y, \lambda, t)$, is determined for the second pattern,
the functions $M_0$ and $M_t$ in each case reproducing the intensity of the transmitted, reflected or scattered analytical radiation as a function of the local coordinates (x, y) of the first and second pattern, respectively, and of the wavelength $\lambda$ at the different times of the detection $t_0$ and t,
(vi) a correction to the sample response function $P_t$ is made in such a way that, by means of the first and the second reference field response function $RF_0$ and $RF_t$, the detector-induced location-dependent, time-dependent and wavelength-dependent fluctuations are eliminated from the sample response function $P_t$, a corrected sample response function $P_{t,corr}$ being obtained,
(vii) the change in the physically measurable property is determined from the corrected sample response function $P_{t,corr}$ and the reference response function $R_0$.

**2.** Method according to Claim 1, **characterized in that,** in step (vii), in each case an average of values of the corrected sample response function $P_{t,corr}$ and the reference response function $R_0$ is formed and these averages are compared with one another.

3. Method according to Claim 1, **characterized in that,** in step (vii), a corrected pattern response function $M_{t,corr}$ is formed from the corrected sample response function $P_{t,corr}$ and the first reference field response function $RF_0$, and this corrected pattern response function $M_{t,corr}$ is correlated with the known location-dependent and wavelength-dependent pattern function $M(x, y, \lambda)$, this correlation being a measure of the change of the physically measurable property.

4. Method according to Claim 3, **characterized in that,** in step (vii), a zero value pattern response function $N_0(x, y, \lambda, t_0)$ is additionally determined from the reference response function $R_0$ and the first reference field response function $RF_0$ and this is correlated with the known location-dependent and wavelength-dependent pattern function $M(x, y, \lambda)$, this correlation representing the zero value of the correlation and the correlation obtained from the corrected pattern response function $M_{t,corr}$ being corrected by this zero value.

5. Method according to Claim 1, **characterized in that,** in step (vii), regions of the corrected sample response function $P_{t,corr}$ and regions of the reference response function $R_0$ are mixed to form a virtual pattern, which is described by a location-dependent and wavelength-dependent virtual pattern function $M_v(x, y, \lambda)$, a virtual pattern response function $V_t(x, y, \lambda, t)$ being obtained by the mixing which, corresponding to the virtual pattern function $M_v$, contains regions of the corrected sample response function $P_{t,corr}$ and regions of the reference response function $R_0$ and, by means of correlation analysis, the correlation of the known location-dependent and wavelength-dependent virtual pattern function $M_v(x, y, \lambda)$ with the virtual pattern response function $V_t(x, y, \lambda, t)$ is determined, this correlation being a measure of the change in the physically measurable property.

6. Method according to one of Claims 1 - 5, **characterized in that** the reference field surrounds or penetrates the sample or reference sample, respectively.

7. Method according to one of Claims 1 - 6, **characterized in that** the difference between the physically measurable properties of the sample P and of the reference sample R is brought about by the fact that the sample P is subjected to an environmental influence and the reference sample is a corresponding sample which is not subjected to the environmental influence.

8. Method according to Claim 7, **characterized in that** the environmental influence is selected from the action of mechanical forces, the action of chemicals, the action of gases, the action of microorganisms, the action of radioactive radiation, the action of sound waves and the action of heat.

9. Method according to Claim 7, **characterized in that** the environmental influence is effected by weathering the sample.

10. Method according to one of Claims 1 to 9, **characterized in that** the first two-dimensional pattern is produced from regions of the reference sample R and of the reference field RF, and the second two-dimensional pattern is produced from regions of the sample P and of the reference field RF by the reference field being configured as a stencil having at least one cutout, and the reference sample R or the sample P being arranged behind the at least one cutout or in the at least one cutout of the stencil.

11. Method according to one of Claims 1 to 10, **characterized in that** the first and second two-dimensional patterns are produced by a surface being covered with a mask which has regions that are permeable and impermeable to the environmental influence, and the environmental influence is allowed to act on the surface through this mask, the regions of the surface covered by the impermeable regions of the mask forming the reference field, and the regions of the surface subjected to the environmental influence forming the reference sample (before the action of the environmental influence) and, respectively, the sample (after the action of the environmental influence).

12. Method according to one of Claims 1 to 11, **characterized in that,** in step (iv), the transmission, reflection or scattering of analytical light in the UV-VIS and/or NIR range is determined.

13. Method according to Claim 12, **characterized in that** the transmission, reflection or scattering of analytical radiation is determined for a plurality of wavelength ranges $\Delta\lambda$ and wavelength-specific response functions are determined for each wavelength range $\Delta\lambda$.

**14.** Method according to Claim 13, **characterized in that** the reflection or scattering of the analytical light as a function of the local coordinates (x, y) is detected with a color scanner.

**15.** Method according to Claim 13, **characterized in that** the reflection or scattering of the analytical light as a function of the local coordinates (x, y) is detected with a digital camera.

**16.** Method according to one of Claims 1 to 15, **characterized in that** the first and second patterns or the virtual pattern are periodic patterns with a local frequency $\alpha$.

**17.** Use of the method according to one of Claims 1 to 7 for examining the abrasion resistance of coatings on a substrate.

**18.** Use of the method according to one of Claims 1 to 7 for the detection of differences between the sample and reference sample in quality control.

**Revendications**

**1.** Procédé de détection des différences entre les propriétés mesurables physiquement d'une sonde P et celles d'une sonde de référence R, avec lequel

(i) une sonde P est mise à disposition,
(ii) une sonde de référence R est mise à disposition,
(iii) un champ de référence plat RF est mis à disposition,
(iv) un premier modèle plat composé de plages de la sonde de référence R et du champ de référence RF et un deuxième modèle plat composé de plages de la sonde P et du champ de référence RF sont générés, le premier et le deuxième modèle étant décrits par une fonction de modèle $M(x, y, \lambda)$ dépendante du lieu et de la longueur d'onde,
(v) la transmission, la réflexion ou la dispersion du rayonnement d'analyse par le premier modèle ou le deuxième modèle est détectée au moyen d'un détecteur à un instant $t_0$ pouvant être choisi librement pour le premier modèle et à l'instant t pour le deuxième modèle en fonction des coordonnées du lieu (x, y) du premier ou du deuxième modèle et de la longueur d'onde du rayonnement d'analyse $\lambda$, et
une première fonction de réponse de modèle $M_0(x, y, \lambda, t_0)$, laquelle contient les plages séparées dans l'espace d'une fonction de réponse de référence $R_0(x, y, \lambda, t_0)$ et une première fonction de réponse de champ de référence $RF_0(x, y, \lambda, t_0)$, est ainsi déterminée pour le premier modèle,
une deuxième fonction de réponse de modèle $M_t(x, y, \lambda, t)$, laquelle contient les plages séparées dans l'espace d'une fonction de réponse de sonde $P_t(x, y, \lambda, t)$ et une deuxième fonction de réponse de champ de référence $RF_t(x, y, \lambda, t)$, est ainsi déterminée pour le deuxième modèle,
les fonctions $M_0$ et $M_t$ restituant respectivement l'intensité du rayonnement d'analyse transmis, réfléchi ou diffusé en fonction des coordonnées du lieu (x, y) du premier et du deuxième modèle ainsi que de la longueur d'onde $\lambda$ aux différents instants de la détection $t_0$ ou t,
(vi) une correction de la fonction de réponse de sonde $P_t$ est effectuée de manière à éliminer de la fonction de réponse de sonde $P_t$ les fluctuations liées au détecteur et dépendantes du lieu, de l'instant et de la longueur d'onde au moyen de la première et de la deuxième fonction de réponse de champ de référence $RF_0$ et $RF_t$, ce qui permet d'obtenir une fonction de réponse de sonde corrigée $P_{t,corr}$,
(vii) la modification de la propriété mesurable physiquement est déterminée à partir de la fonction de réponse de sonde corrigée $P_{t,corr}$ et de la fonction de réponse de référence $R_0$.

**2.** Procédé selon la revendication 1, **caractérisé en ce que** dans l'étape (vii), est déterminée une moyenne respectivement des valeurs de la fonction de réponse de sonde corrigée $P_{t,corr}$ et de la fonction de réponse de référence $R_0$ qui sont ensuite comparées entre elles.

**3.** Procédé selon la revendication 1, **caractérisé en ce que** dans l'étape (vii), une fonction de réponse de modèle corrigée $M_{t,corr}$ est formée à partir de la fonction de réponse de sonde corrigée $P_{t,corr}$ et de la première fonction de réponse de champ de référence $RF_0$ et la fonction de réponse de modèle corrigée $M_{t,corr}$ est corrélée avec la fonction de modèle dépendant du lieu et de la longueur d'onde connue $M(x, y, \lambda)$, cette corrélation étant une indication de la modification de la propriété mesurable physiquement.

**4.** Procédé selon la revendication 3, **caractérisé en ce que** dans l'étape (vii), une fonction de réponse de modèle de

valeur nulle $N_0(x, y, \lambda, t_0)$ est déterminée en plus à partir de la fonction de réponse de référence $R_0$ et de la première fonction de réponse de champ de référence $RF_0$ et celle-ci est corrélée avec la fonction de modèle dépendant du lieu et de la longueur d'onde connue $M(x, y, \lambda)$, cette corrélation représentant la valeur nulle de la corrélation et la corrélation obtenue à partir de la fonction de réponse de modèle corrigée $M_{t,corr}$ étant corrigée de cette valeur nulle.

**5.** Procédé selon la revendication 1, **caractérisé en ce que** dans l'étape (vii), des plages de la fonction de réponse de sonde corrigée $P_{t,corr}$ et des plages de la fonction de réponse de référence $R_0$ sont mélangées pour former un modèle virtuel qui est décrit par une fonction de modèle virtuel dépendante du lieu et de la longueur d'onde $M_v(x, y, \lambda)$, le mélange produisant une fonction de réponse de modèle virtuel $V_t(x, y, \lambda, t)$ qui contient, conformément à la fonction de modèle virtuel $M_v$, des plages de la fonction de réponse de sonde corrigée $P_{t,corr}$ et des plages de la fonction de réponse de référence $R_0$, et la corrélation de la fonction de modèle virtuel dépendante du lieu et de la longueur d'onde connue $M_v(x, y, \lambda)$ avec la fonction de réponse de modèle virtuel $V_t(x, y, \lambda, t)$ est déterminée par une analyse de corrélation, cette corrélation étant une indication de la modification de la propriété mesurable physiquement.

**6.** Procédé selon l'une des revendications 1 à 5, **caractérisé en ce que** le champ de référence entoure ou traverse la sonde ou la sonde de référence.

**7.** Procédé selon l'une des revendications 1 à 6, **caractérisé en ce que** la différence entre les propriétés mesurables physiquement de la sonde P et de la sonde de référence R sont provoquées **en ce que** la sonde P est exposée à une influence de l'environnement et la sonde de référence est une sonde correspondante qui n'est pas exposée à l'influence de l'environnement.

**8.** Procédé selon la revendication 7, **caractérisé en ce que** l'influence de l'environnement est choisie parmi les effets de forces mécaniques, les effets de produits chimiques, les effets de gaz, les effets de microorganismes, les effets du rayonnement radioactif, les effets des ondes sonores et les effets de la chaleur.

**9.** Procédé selon la revendication 7, **caractérisé en ce que** l'influence de l'environnement est provoqué par une exposition de la sonde aux intempéries.

**10.** Procédé selon l'une des revendications 1 à 9, **caractérisé en ce que** le premier modèle plat est généré à partir des plages de la sonde de référence R et du champ de référence RF et le deuxième modèle plat des plages de la sonde P et du champ de référence RF en doutant le champ de référence, qui fait office de gabarit, d'au moins un creux et en disposant la sonde de référence R ou la sonde P derrière l'au moins un creux ou dans l'au moins un creux du gabarit.

**11.** Procédé selon l'une des revendications 1 à 10, **caractérisé en ce que** le premier et le deuxième modèle plats sont générés en recouvrant une surface d'un masque qui présente des zones perméables et imperméables aux influences de l'environnement et en laissant l'influence de l'environnement agir sur la surface à travers ce masque, les zones de la surface qui sont recouvertes par les zones imperméables du masque formant le champ de référence et les zones de la surface exposées à l'influence de l'environnement formant la sonde de référence (avant les effets de l'influence de l'environnement) ou la sonde (après les effets de l'influence de l'environnement).

**12.** Procédé selon l'une des revendications 1 à 11, **caractérisé en ce que** dans l'étape (iv), la transmission, la réflexion ou la diffusion de la lumière d'analyse est déterminée dans la plage UV-VIS et/ou NIR.

**13.** Procédé selon la revendication 12, **caractérisé en ce que** la transmission, la réflexion ou la diffusion du rayonnement d'analyse est déterminée pour une pluralité de plages de longueurs d'onde $\Delta\lambda$ et des fonctions de réponse spécifiques à la longueur d'onde sont déterminées pour chaque plage de longueurs d'onde $\Delta\lambda$.

**14.** Procédé selon la revendication 13, **caractérisé en ce que** la réflexion ou la diffusion de la lumière d'analyse est détectée au moyen d'un scanner couleur en fonction des coordonnées du lieu $(x, y)$.

**15.** Procédé selon la revendication 13, **caractérisé en ce que** la réflexion ou la diffusion de la lumière d'analyse est détectée au moyen d'un appareil photo numérique en fonction des coordonnées du lieu $(x, y)$.

**16.** Procédé selon l'une des revendications 1 à 15, **caractérisé en ce que** le premier et le deuxième modèle ou encore le modèle virtuel sont des modèles périodiques ayant une fréquence de lieu $\alpha$.

**17.** Utilisation d'un procédé selon l'une des revendications 1 à 7 pour analyser la résistance à l'abrasion de revêtements sur un substrat.

**18.** Utilisation d'un procédé selon l'une des revendications 1 à 7 pour la détection de différences entre un échantillon et un échantillon de référence lors du contrôle de la qualité.

# FIG.1

FIG.2

# FIG.3

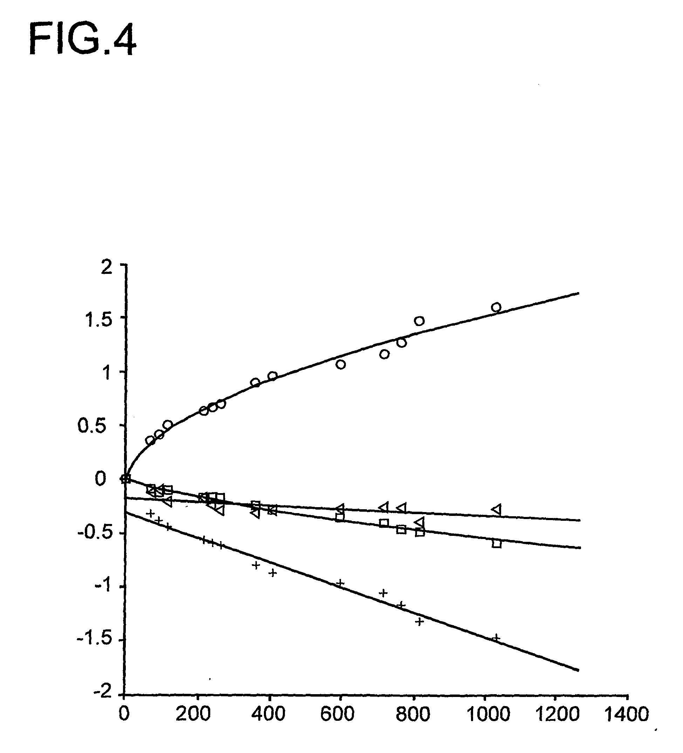

# FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0908716 A1

- GB 1315318 A